# EUROPEAN PATENT APPLICATION

(11) **EP 3 965 048 A1**
(43) Date of publication of application: **09.03.2022**
(21) Application number: 21020416.0
(22) Date of filing: 16.08.2021
(51) Int. Cl.: G06Q 40/02

(54) **A REPORTING TEMPLATE FOR DETERMINING CREDIT RATING**

(30) Priority: 02.09.2020 US 202017010412
(71) Applicant: European DataWarehouse GmbH, 60594 Frankfurt a. M. (DE)
(72) Inventor: Thun, Christian, 61118 Bad Vilbel (DE)
(74) Representative: Meyer-Dulheuer MD Legal Patentanwälte PartG mbB

(57) **Abstract**

The present invention provides a system and method for evaluating a credit rating of an asset backed securities. The system comprises a data warehouse, an electronic device comprising with a processor, a memory coupled to the processor for storing a source code, a credit rating display module display the calculated credit rating, and a software system executable on the processor, the software system including a data loan-level data template module configured to access a revised loan template stored in the data warehouse, and an evaluating module configured to calculate the credit rating of the asset backed securities using an algorithm based on a revised loan template. The data warehouse stores the revised loan-level data template that is an integrated template which is regularly updated based on a financial regulatory authority template and on a credit rating agency template supplied by a credit rating agency.

## Description

### Cross Reference to Related Application

The present application claims priority of U.S. Patent Application No. 17/010,412 filed September 2, 2020. The entire contents of which are hereby incorporated by reference.

### Field of the Invention

The present invention relates generally to the field of automated reporting for asset-backed securities or a financial security collateralized by a group of assets to comply with regulatory disclosure obligations and for determining a credit rating. More specifically, the invention relates to software or a business method for designing reporting templates that are based on ESMA templates with additional data fields relevant to the credit rating process (ESMA: European Securities and Markets Authority).

### Background

During recent years, lending practice has been on the rise where residential properties or other assets (e.g. gold items) are used as collateral demands to provide an amount of money and the amount of money is termed as loan. The market value of residential properties or other assets is validated by some means and on basis of the market value, the loan amount is sanctioned to the borrower by the lender. Basically, financial institutions, such as banks, credit union, building society, or credit card companies are the loan provider. The borrower incurs a debt, and is usually liable to pay interest on that debt along with the principal amount borrowed. The process of applying and obtaining loan is very complicated and time consuming as it involves a number of variables, regarding the loan, the lender, the borrower, and the number of parties involved in the loan process.

Moreover, the mortgage loan system has evolved significantly and has been an efficient promoter in improving global economy. A mortgage loan or, simply, mortgage is used either by business owners or real property owners to raise funds to buy any property for any purpose, while putting a lien on the property being mortgaged. The lender of mortgage loan is typically a financial institution, such as a bank, credit union or building society, depending on the country concerned, and the loan arrangements can be made either directly or indirectly through intermediaries. The mortgage loan system is specifically based out of an asset security backed system. The asset-backed security ("ABS") is a financial security collateralized by a pool of assets such as loans, leases, credit card debt, royalties or receivables.

For investors, asset-backed securities are an alternative to investing in corporate or sovereign debt. Specifically, securitising loans via asset-backed securities allow originators such as banks to free up capital and generate liquidity, which, in turn, is used for more lending, while giving investors the opportunity to invest in a wide variety of income-generating assets. Usually, the underlying assets of an ABS are illiquid and cannot be sold on their own. Generally, asset-backed securities and mortgage-backed securities are two important types of asset classes. Mortgage based securities are securities created from the pooling of mortgages, and then sold to interested investors, whereas assets backed securities have evolved out of mortgage backed securities and are created from the pooling of non-mortgage assets. Moreover, the automated backed security market was developed in the 1980s and has become increasingly important to the U.S. debt market.

The ABS loan-level initiative of the European Central Bank in 2012 as well as the new Securitisation Regulation (EU) 2017/2402 since Jan 1st, 2019, have established specific loan-by-loan information requirements for asset-backed securities (ABSs) in order to increase transparency on the underlying loans and their performance to market participants (e.g. investors, credit rating agencies) in a standard format. To submit the loan-by-loan information, standardised reporting templates per asset class (e.g. residential mortgages, auto loans) were developed by the European Central Bank in 2012 and by the ESMA in 2018. Issuers of ABS transactions submit the reporting templates to a designated securitisation data repository (in the case of the Eurosystem the European DataWarehouse) that will ensure the loan-by-loan information will be stored, checked for compliance with the specific requirements, as well as for accuracy, consistency and timeliness and is made available to market participants. As of July 2020, the European DataWarehouse stores more than 35,000 of such submissions.

The reporting templates developed by the European Central Bank (ECB) in 2012 are widely used by all major credit rating agencies (Moody's, S&P, Fitch, and DBRS) in Europe. European users of ABS transactions appreciate the benefit of being able to use a single reporting template that meets the requirements of the European Central Bank as well as their credit rating agency (e.g. contain all information needed for Moody's MILAN model to assess residential mortgage backed securities). With the introduction of the Securitisation Regulation (EU) 2017/2402, ESMA developed a new set of reporting templates in 2018 that will over time replace the existing ECB templates. These new templates no longer include information relevant for the assessment process of a credit rating agency. European ABS issuers will be forced to separately submit the missing information to their credit rating agency.

In one of the art, US2006242047A1 discloses a modelling approach that utilizes various data sources to provide outputs that describe a consumer's spending capability, tradeline history including balance transfers and balance information. These outputs can be appended to data profiles of customers and prospects and can be utilized to support decisions involving prospecting, new applicant evaluation, and customer management across the lifecycle. The likelihood of default determined by the Share of Wallet ("SOW") model, when applied to a loan portfolio, can reduce the amount of credit enhancement required for an asset-backed security rating. However, a credit rating agency cannot evaluate credit rating efficiently. Moreover, this modelling approach is completely mute on a single reporting template that could be universally used.

In one of the art, US2013332324A1 discloses systems and methods to manage investments, trades, and financial accounting. The integrated system processes an investment under various investment groups and accounting methodologies, such as GAAP, SAP, Tax and Trade. An investment is processed based on events occurring during the life of the investment for each accounting method to provide for accurate financial reporting in accordance with the one or more accounting methods, such as GAAP, SAP and Tax accounting. The system is flexible to calculate cash flow, yield, and amortization for an investment during the lifespan timeline of the investment based on the occurrence of an event (or a hypothetical event) during the lifespan timeline of the investment. Accurate reporting is provided by effective dating events of an investment to the appropriate reporting period. The system provides for consolidation, e.g., the aggregation of income and assets from a set of portfolios to report them as one group. However, the reporting template disclosed cannot be used by a credit rating agency due to its limited functional features.

Moreover, analysis of credit risk within pools of assets is a significant part of managing securities backed by assets. A newly designed template as the official data template of ESMA is supposed to be issued in the close future.

It can be concluded that there is an urgent requirement for a single reporting template that would be based on ESMA templates and that will be extended by additional data fields relevant for any of the credit rating processes by any credit rating agencies. Moreover, this problem can be addressed by creating a new set of reporting templates that are based on the ESMA templates and will be extended by additional data fields relevant for the credit rating process.

### Summary

Consistent with the disclosed embodiments, a computer implemented system is provided for evaluating credit rating of asset backed securities using revised loan-level data templates for different asset classes (e.g. mortgages, credit cards). The revised loan-level data template comprises two sections, namely a primary data field and a secondary data field. The revised loan-level data template is updated using automatic data processing. Specifically, the revised loan-level data template is based on the ESMA templates and is extended by additional data fields relevant for a credit rating process. The new set of reporting data templates comprises various relevant fields needed for determining credit rating by an agency or by a financial institution. Moreover, a section may be defined in the data template to include additional data fields which is necessary for evaluating credit rating by credit rating agencies with a primary data field and a secondary data field, the primary data field including a primary group of information based on a financial regulatory authority template and the secondary data field including a secondary group of information based on a credit rating agency template supplied by a credit rating agency.

The present invention is directed to retrieving a new revised loan-level data template from a data warehouse. The revised loan template may be accessible remotely from anywhere without any dedicated server using a networked electronic device. A credit rating agency can access this template for evaluating credit rating of asset backed securities. These financial reporting templates which are intended to improve transparency, give investors and the financial regulatory authority access to loan-level data, as well as ensure that credit rating agencies and other market participants are updated regularly. Moreover, the revised loan-level data template is specifically a universal loan-level data template that may comprise data which can be monitored and updated related to collateral value and credit ratings of borrowers comprising underlying assets of a security to reflect updated information useful for processing by financial models used to rate investments. This new set of data template may help in restoring confidence in data utilized by structured finance professionals, including credit rating agencies and investors.

The present invention promotes investment in the market and increases liquidity in the market. The invention provides the marketplace with better in-depth analysis, as well as looks for potential partnerships and acquisitions. This invention provides a drill down solution and allows users to drill up into rolled up structures offering better transparency. The invention tracks recourse for purchasers of newly securitized instruments, which will lead to more aggressive models for pricing of securities and derivative products providing enhanced value to sell-side and buy-side participant.

For the invention, a computer implemented system for evaluating a credit rating of an asset backed security is disclosed. The computer implemented system comprises a data warehouse, an electronic device with a processor, a memory coupled to the processor for storing a source code, and a credit rating display module that displays the calculated credit rating, the computer implemented system furthermore comprising a software system executable on the processor, the software system including a data loan-level data template module configured to access a revised loan-level data template stored in the data warehouse, and an evaluating module configured to calculate the credit rating of the asset backed securities using an algorithm based on a revised loan-level data template, the data warehouse further comprising an automatic data transfer both to a financial regulatory authority and to a credit rating agency with the data warehouse storing the revised loan-level data template, and the revised loan-level data template comprises a primary data field and a secondary data field, the primary data field including a primary group of information based on a financial regulatory authority template and the secondary data field including a secondary group of information supplied by a credit rating agency.

For the invention, a method for facilitating an automated data transfer in a credit rating process is disclosed. The method comprises retrieving a revised loan-level data template from a data warehouse, retrieving the revised loan-level data template by means of an automatic data transfer process from a financial regulatory authority template and from a credit rating agency template, calculating the credit rating of an asset backed security using an algorithm based on the revised loan-level data template, and displaying the calculated credit rating of the asset backed security.

In one embodiment of the invention, a method for evaluating a credit rating of an asset backed security is disclosed. The method comprises providing and creating a single reporting data template, the single reporting data template collating an ESMA required data and data required for credit rating agencies, and automatically transferring data stored in single reporting data template to credit rating agencies for calculating a credit rating. The ESMA required data comprises data relevant for regulatory reporting purposes and is fetched from the official data template of ESMA. The data required for credit rating agencies is fetched and supplied from different credit rating agencies. The system is used for assessing credit rating using the single reporting template.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### Brief description of the drawings

The embodiments herein will be better understood from the following detailed description with reference to the drawings, in which:
FIG.1 illustrates an exemplary system for evaluating a credit rating of an asset backed security consistent with disclosed embodiments.
FIG.2 illustrates an exemplary design of a revised loan-level data template.
FIG.3 illustrates a flowchart of an exemplary credit rating evaluation process consistent with disclosed embodiments.

### Detailed description of the preferred embodiments

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the features of the present invention therein. The examples used herein are intended merely to facilitate an understanding of ways in which the embodiments herein may be practised and to further enable those of skill in the art to practice the embodiments herein. Accordingly, the examples should not be construed as limiting the scope of the embodiments herein.

FIG.1 discloses a computer implemented system **(100)** for evaluating a credit rating of asset backed securities. The computer implemented system **(100)** comprises a data warehouse **(104)**, an electronic device **(102)** with a processor **(106)**, a memory **(108)** coupled to the processor **(106)** for storing a source code, a software system **(112)** executable on the processor **(106)**, the software system including a loan-level data template module **(118)** configured to access a revised loan-level data template stored in the data warehouse, an evaluating module **(116)** configured to calculate the credit rating of the asset backed securities using an algorithm based on a revised loan-level data template, and a credit rating display module **(114)** that displays the calculated credit rating by a display module **(110)**. The data warehouse stores the revised loan-level data template and comprises a primary data field and a secondary data field, the primary data field including a primary group of information based on a financial regulatory authority template and the secondary data field including a secondary group of information supplied by a credit rating agency. The memory **(108)** can be in any form, including non-transient memory.

FIG.2 illustrates an exemplary design of a revised loan-level data template **(200).** The revised loan-level data template stores loan data in tabular form which is easily available for calculation of credit rating. The revised loan-level data template comprises two sections, namely a primary data field **(202)** and a secondary data field **(204)**. The primary data field **(202)** comprises data fields based on templates of a financial regulatory authority **(206)** and the secondary data field **(204)** contains additional data fields based on information supplied by a template of a credit rating agency **(208)**. The revised loan-level data template **(200)** receives data from the financial regulatory authority template **(206)** and from the credit rating agency template **(208)** by means of automatic data transfer process.

The revised loan-level data template **(200)** presents an optimal solution to the new reporting template introduced by the European Securities and Markets Authority (ESMA). This template smoothens the process of evaluating a credit rating process. More specifically, the revised loan-level data template works on a universal approach for a financial regulatory authority and for a credit rating agency.

FIG.3 illustrates a flowchart of an exemplary credit rating evaluation method consistent with the disclosed embodiments. The process includes the steps of retrieving a revised loan-level data template from a data warehouse **(302),** retrieving the revised loan template by means of an automatic data transfer process from a financial regulatory authority template and a credit rating agency template, calculating the credit rating of the asset backed security using an algorithm based on the revised loan-level data template **(304)**, and displaying the calculated credit rating of the asset backed security **(306).**

The present invention claims a set of financial reporting templates which are intended to improve transparency, give investors and the financial regulatory authority access to loan-level-data, as well as ensure that credit rating agencies are updated with the additional information relevant for the credit rating process. Moreover, a single integrated template is designed that comprises data that are monitored and updated related to collateral values and credit ratings of borrowers comprising underlying assets of securities to reflect updated information useful for processing by financial models used to rate investments. These new set of data template may help in restoring confidence in data utilized by structured finance professionals, including credit rating agencies and investors.

The present invention provides advantageous features for facilitating automated data transfer in credit rating process. The method comprises providing and creating a single reporting data template, the single reporting data template collating an ESMA-required data and data required for credit rating agencies, and automatically transferring data stored in single reporting data template to credit rating agencies for calculating credit rating. The ESMA-required data comprises data relevant for regulatory reporting purposes and is fetched from the official data template of ESMA. The data required for credit rating agencies is fetched and supplied from different credit rating agencies.

The present invention claims promoting investment in the market so as to increase liquidity in the market. The invention provides the marketplace with better in-depth analysis, as well as looks for potential partnerships and acquisitions. This invention provides a drill down solution and allows users to drill up into rolled up structures offering better transparency. The invention tracks recourse for purchasers of newly securitized instruments, which will lead to more aggressive models for pricing of securities and derivative products providing enhanced value to sell-side and buy-side participant.

Each of the steps described herein can be performed using a general purpose computing device, e.g., a personal computer, personal digital assistant, and/or computing device that is in communication with a network, e.g., internet, intranet, or extranet, that includes a memory and a set of instructions, that is, logic, specifically scripted to perform the functions, steps, communications, and data manipulations described herein. As the present invention is not limited to any specific instruction set, e.g., code, usable to implement one or more aspects of the present invention, and as those of skill in the art are well aware of the ways to instruct such a computing device to implement such functions, steps, communications, and data manipulations, further details of such specific instruction sets will not be provided here so as to not obscure the features of the present invention. While one or more of the functions, steps, communications, and data manipulations can be performed by hand or by a computerimplemented instruction set, the present invention is not limited to any one subcombination thereof. Data gathering can be performed manually, in a semi-automated manner (e.g., given to a human person who then inputs the data into a computing device's memory), or in a fully-automated manner (e.g., the customer interacts directly with a computing device to input the data into a computer's memory). As will be readily appreciated by those of skill in the art, the present invention also includes the use of multiple computing devices on a communications network (including the use of removable memory media to transfer data between devices), including that the computing device via which data is input by any one human user is different from a computing device that implements decision instruction sets.

As mentioned, there remains the foregoing description of the specific embodiments that fully reveal the general nature of the embodiments herein and that others can, by applying current knowledge, readily modify and/or adapt for various applications such specific embodiments without departing from the generic concept, and, therefore, such adaptations and modifications are intended to be comprehended within the meaning and range of equivalents of the disclosed embodiments.

It is to be understood, however, that even though numerous characteristics and advantages of the present invention have been set forth in the foregoing description, together with details of the structure and function of the invention, the disclosure is illustrative only. Changes may be made in the details, especially in matters of shape, size, and arrangement of parts within the principles of the invention to the full extent indicated by the broad general meaning of the terms in which the appended claims are expressed.

### Examples

The invention is further illustrated by nineteen examples. The business segments are divided into loans and collaterals usually. The examples are described in summary as follows:
Example 1 gives the URL source of supply for the reporting templates of the European Securities and Markets Authority on September 01, 2020. The field code, the field name, the content to report, the format and various additional information are given in this template. The templates are publicly available and represent state of the art.
Example 2 describes the additional data fields that were developed for the present invention.
Example 3 describes the input fields in csv-format with the credit rating information of residential loan section for the data fields of the ESMA and the additional data fields.
Example 4 describes the input fields in csv-format with the credit rating information of residential collateral section for the data fields of the ESMA and the additional data fields.
Example 5 describes the input fields in csv-format with the credit rating information of commercial real estate loan section for the data fields of the ESMA and the additional data fields.
Example 6 describes the input fields in csv-format with the credit rating information of commercial real estate collateral section for the data fields of the ESMA and the additional data fields.
Example 7 describes the input fields in csv-format with the credit rating information of the loans of commercial real estate tenant section for the data fields of the ESMA and the additional data fields.
Example 8 describes the input fields in csv-format with the credit rating information of corporate loan section for the data fields of the ESMA and the additional data fields.
Example 9 describes the input fields in csv-format with the credit rating information of corporate collateral section for the data fields of the ESMA and the additional data fields.
Example 10 describes the input fields in csv-format with the credit rating information of automobile loans for the data fields of the ESMA and the additional data fields.
Example 11 describes the input fields in csv-format with the credit rating information of consumer loans for the data fields of the ESMA and the additional data fields.
Example 12 describes the input fields in csv-format with the credit rating information of credit card loans for the data fields of the ESMA and the additional data fields.
Example 13 describes the input fields in csv-format with the credit rating information of leasing loans for the data fields of the ESMA and the additional data fields.
Example 14 describes the input fields in csv-format with the ad-on credit rating information of non-performing exposure loans for the data fields of the ESMA (being added to the ESMA template for residential mortgages as an example) and the additional data fields.
Example 15 describes the input fields in csv-format with the add-on credit rating information of non-performing exposure collaterals for the data fields of the ESMA (being added to the ESMA template for residential mortgages as an example) and the additional data fields.
Example 16 describes the input fields in csv-format with the credit rating information of the investor report securitisations section for the data fields of the ESMA and the additional data fields.
Example 17 describes the input fields in csv-format with the credit rating information of the investor report cashflow section for the data fields of the ESMA and the additional data fields.

The examples are as follows:

### Example 1

The internet URL for the templates is "https://www.esma.europa.eu/policyactivities/securitisation#title-paragrah-3".

### Example 2

| **Field** | **Section** | **Field Name** | **Content to report** | **Format** | **For info: existing ECB or EBA NPL template field code** |
|---|---|---|---|---|---|
| ED1_RREL | **Underlying exposures information section** | Foreign National | Indicating whether the borrower is a foreign national of the country in which the property and mortgage loan resides. | {Y/N} | AR16 |
| ED2_RREL | **Underlying exposures information section** | Restructure type | Type of restructure or other forbearance measure applied: Amortisation modification e.g. amortising to IO[AMRT] | {LIST} | |
| | | | Arrears capitalisation[ARRS] | | |
| | | | Interest rate/margin reduction[INTR] | | |
| | | | Term extension[TEXT] | | |
| | | | Principal/interest payment holiday[PAYH] | | |
| | | | Split/warehoused loan[SWHL] | | |
| | | | Other[OTHR] | | |
| ED3_RREL | **Underlying exposures information section** | Further Advances | Total value of further advances made on loan. If several further advances have been made list all advances (if available), comma delimited. | {ALPHANUM-1000} | *AR88* |
| ED4_RREL | **Underlying exposures information section** | Further Advance Date | Date last further advance was made. If several further advances have been made list all advance dates (if available), comma delimited | {DATEFORMAT} | *AR89* |
| ED5_RREL | **Underlying exposures information section** | Repurchased Amount | Outstanding principal amount as of the date of repurchase. | {MONETARY} | |
| ED6_RREL | **Underlying exposures information section** | Last County Court Judgements or equivalent - Date | Date last CCJ or equivalent was registered against the primary borrower regardless of satisfied or not | {DATEFORMAT} | *AR35* |
| ED7_RREL | **Underlying exposures information section** | Bankruptcy or Individual Voluntary Arrangement Flag | Flag to identify if borrower has been bankrupt or had an Individual Voluntary Arrangement (IVA) or equivalent | {Y/N} | *AR36* |
| ED8_RREL | **Underlying exposures information section** | Subsidy | Is the loan repayment subsidised by an external party? | {Y/N} | *AR64* |
| ED9_RREL | **Underlying exposures information section** | Subsidy Received | Amount of subsidy received from government by borrower | {MONETARY} | *AR77* |
| ED10_RREL | **Underlying exposures information section** | Subsidy % Received | Subsidy % received from government by borrower | {PERCENTAGE} | |
| ED11_RREL | **Underlying exposures information section** | Final Margin | The margin (%) for the loan at the final step date | {PERCENTAGE} | *AR120* |
| ED12_RREL | **Underlying exposures information section** | Number of Debtors | Number of borrowers to the loan | {INTEGER-1000} | *AR19* |
| ED13_RREL | **Underlying exposures information section** | First-time Buyer | First time buyer flag | {Y/N} | *AR22* |
| ED14_RREL | **Underlying exposures information section** | Right to Buy | Right to Buy (RTB) flag | {Y/N} | *AR23* |
| ED15_RREL | **Underlying exposures information section** | Number of County Court Judgements or equivalent - Satisfied | Number of County Court Judgements (CCJs) or equivalent in particular jurisdiction (typically a default or court proceedings flag in continental Europe) - recorded against the primary borrower that were satisfied (the balance cleared) at time of underwriting. | {NUMERIC} | *AR31* |
| ED16_RREL | **Underlying exposures information section** | Value of County Court Judgements or equivalent - Satisfied | Total value of CCJs or equivalent recorded against the primary borrower that were satisfied at time of underwriting | {NUMERIC} | *AR32* |
| ED17_RREL | **Underlying exposures information section** | Number of County Court Judgements or equivalent - Unsatisfied | Number of CCJs or equivalent recorded against the primary borrower that were unsatisfied at time of underwriting | {NUMERIC} | *AR33* |
| ED18_RREL | **Underlying exposures information section** | Value of County Court Judgements or equivalent - unsatisfied | Total value of CCJs or equivalent recorded against the primary borrower that were unsatisfied at time of underwriting. | {NUMERIC} | *AR34* |
| ED19_RREL | **Underlying exposures information section** | Prior Repossessions | Indicator of prior repossessions resulting from a borrower defaulting on a previous mortgage loan | {Y/N} | *AR47* |
| ED20_RREL | **Underlying exposures information section** | Previous Mortgage Arrears 0-6 Months | Number of payments missed on previous mortgage in the prior 0-6 months (information as at underwriting) | {INTEGER-1000} | *AR48* |
| ED21_RREL | **Underlying exposures information section** | Mortgage Indemnity Guarantee Provider | Name of Mortgage Indemnity Guarantee (MIG) provider if applicable | {ALPHANUM-1000} | *AR78* |
| ED22_RREL | **Underlying exposures information section** | Mortgage Indemnity Guarantee Attachment Point | MIG attachment point - LTV percentage above which losses are insured | {PERCENTAGE} | *AR79* |
| ED23_RREL | **Underlying exposures information section** | Other Prior Balances | Total balance ranking prior to this loan held with other lenders (subset of Prior Balances) | {MONETARY} | *AR81* |
| ED24_RREL | **Underlying exposures information section** | Retained Amount | Amount the Issuer will be obliged to fund to the borrower at a later date, for example construction deposit | {MONETARY} | *AR85* |
| ED25_RREL | **Underlying exposures information section** | Flexible Loan Amount | Current obligated amount (scheduled/unscheduled repayments) which can be drawn under the flexible loan by the borrower. Please provide details on the definition of the flexible loan amount | {MONETARY} | *AR90* |
| ED26_RREL | **Underlying exposures information section** | Mortgage Inscription | Actual amount of mortgage inscription for the loan | {ALPHANUM-1000} | *AR94* |
| ED27_RREL | **Underlying exposures information section** | Mortgage Mandate | Amount of mortgage mandate that can be converted into a proper mortgage at a later stage. | {ALPHANUM-1000} | |
| ED28_RREL | **Underlying exposures information section** | Performance Arrangement Date | The date when the borrower had an arrangement put in place to reduce the balance of any arrears whilst maintaining their current payment | {DATEFORMAT} | *AR173* |
| ED29_RREL | **Underlying exposures information section** | Is Borrower Employee of Originator? | Is Borrower Employee of Originator? | {Y/N} | |
| ED30_RREL | **Underlying exposures information section** | Lending Type | Additional qualifiers for Loan Purpose: PAP - Pret pour I'Accession à la Propriété | {LIST} | |
| | | | PTZ - Prêt à taux zero | | |
| | | | PEL - Plans Epargne Logement | | |
| | | | REL - relais | | |
| | | | TRV - travaux | | |
| | | | CLS - classique | | |
| | | | YNG - Young person loan | | |
| | | | BRDG - Bridge Loan | | |
| | | | COMD - Cuota Comodin Loan | | |
| | | | EASY - Easy Installment Loan | | |
| ED31_RREL | **Underlying exposures information section** | Repayment Method | Type of principal repayment. | {LIST} | *AR69* |
| | | | REP - Repayment | | |
| | | | IO - Interest only | | |
| | | | LIFE - Life Insurance | | |
| | | | INV - Investment Portfolio | | |
| | | | ANN - Annuity | | |
| | | | SAV - Savings | | |
| | | | END - Endowment | | |
| | | | PEN - Pension | | |
| | | | PEP - Pep Loan | | |
| | | | IND - IndexLinked | | |
| | | | PP - Part and Part | | |
| | | | CONT - Constant installment | | |
| | | | PAMT - Preamortization | | |
| | | | OTHR - Other | | |
| ED32_RREL | **Underlying exposures information section** | Date that IO period finishes | Date that the Interest Only period finishes for IO loans | {DATEFORMAT} | |
| ED33_RREL | **Underlying exposures information section** | Inflation Cap | If the loan has an inflation cap? | {Y/N} | |
| ED34_RREL | **Underlying exposures information section** | Flexible Loan | Indicates if Loan has flexible features, such as: | {LIST} | |
| | | | Overpay[OPAY] | | |
| | | | Underpay[UPAY] | | |
| | | | Take payment holidays[PAYH] | | |
| | | | Borrow back overpayments[BBOP] | | |
| | | | Not apply any Early Repayment Charges[NAER] | | |
| | | | Calculate your Interest daily [CIND] | | |
| | | | Multiple features[MTPF] | | |
| ED35_RREL | **Underlying exposures information section** | Subordinated Claims | Total value of loans with claims subordinated to this loan (not in this pool) | {MONETARY} | *AR83* |
| ED36_RREL | **Underlying exposures information section** | Borrower Credit Quality | Originators definition of Borrower's Credit Quality | {ALPHANUM-1000} | *AR17* |
| ED37_RREL | **Underlying exposures information section** | Name of Guarantor | Name of guarantee provider | {ALPHANUM-1000} | *AR75* |
| ED38_RREL | **Underlying exposures information section** | BKR - Registration Date | Registration date of the BKR | {DATEFORMAT} | *AR39* |
| ED39_RREL | **Underlying exposures information section** | BKR- Credit Type | AK - Loans which have to pay back in a predefined period | {LIST} | *AR37* |
| | | | RK - Loans with a maximum credit amount | | |
| | | | SR - Loan with the aim to re-arrange previous credits | | |
| | | | VK - Credit maximum with respect to goods ordered with mail-order companies | | |
| | | | HY - mortgage loans | | |
| | | | TC - telecom credits | | |
| | | | RO - Other credit | | |
| ED40_RREL | **Underlying exposures information section** | BKR - Arrears Code | A - arrears | {LIST} | |
| | | | AH - arrears repaid | | |
| | | | A1 - settlement reached | | |
| | | | A2 - remaining outstanding is summoned | | |
| | | | A3 - an amount > Euro 250 is depreciated | | |
| | | | A4 - person disappeared | | |
| ED41_RREL | **Underlying exposures information section** | BKR - Is Coding Cured? | Is the coding with BKR cured? (Holland only) | {Y/N} | |
| ED42_RREL | **Underlying exposures information section** | BKR - Credit Amount | Amount of the credit (Holland only) | {MONETARY} | |
| ED43_RREL | **Underlying exposures information section** | BKR - Number of Months Since Cured | If the coding is cured, number of months since it is cured (Holland only) | {INTEGER-1000} | |
| ED1_RREC | **Collateral information section** | Date Last Current | If the borrower is in arrears, the date they were last current | {DATEFORMAT} | *AR167* |
| ED2_RREC | **Collateral information section** | Covered Pool Balance | Covered Pool Balance is the portion of the Current Balance and the Additional Balance that meets the covered bond eligibility criteria. It should be less than or equal to the sum of the Current Balance and the Additional Balance." | {MONETARY} | |
| ED3_RREC | **Collateral information section** | Confidence Interval for Current Automated Valuation Model Valuation | List the Automated Valuation Model (AVM) supplier's confidence value for the most recent valuation. | {INTEGER-1000} | *AR146* |
| ED4_RREC | **Collateral information section** | Provider of Current Automated Valuation Model Valuation | Name of Automated Valuation Model (AVM) provider if current valuation method is AVM. | {ALPHANUM-1000} | *AR147* |
| ED5_RREC | **Collateral information section** | Property Postcode | First 2 or 3 characters must be provided at a minimum. Property postcode to be provided for all properties | {ALPHANUM-1000} | *AR129* |
| ED6_RREC | **Collateral information section** | Current Valuation Type | Current Valuation type: Full, internal and external inspection (1)[FINT] Full, only external inspection (2)[FEXT] Drive-by (3)[DRIV] AVM (flag as AVM only if this type of valuation has been used for origination purposes) (4)[AVME] Indexed (5)[INDX] Desktop (6)[DSKT] Managing Agent / Estate Agent (7)[AGET] Tax Authority (8)[TAXA] Other (9)[OTHR] | {ALPHANUM-1000} | *AR144* |
| ED7_RREC | **Collateral information section** | Occupancy Type - properties owned by borrower | Provide until 5 comma separated values. Type of property occupancy: Owner Occupied i.e. owned by a private household with the purpose of providing shelter to its owner (FOWN) Partially Owner Occupied (A property which is partly rented) (POWN) Non-Owner Occupied or Buy-To-Let (TLET) Holiday or Second Home (HOLD) Other (OTHR) | {ALPHANUM-1000} | *AR130* |
| ED8_RREC | **Collateral information section** | Property Value pro rata or full property value? | information whether provided property value is provided pro-rata, or whether it is a full property value (in case, when borrower has multiple loan parts). | {Y/N} | |
| ED9_RREC | **Collateral information section** | Market value or foreclosure value? | indicate whether market value or foreclosure value was provided in the field "Property value: Market Value (MV) or Foreclosure Value (FV)" | {LIST} | |
| ED10_RREC | **Collateral information section** | DSCR | For Buy to Lets the Debt Service Coverage Ratio - Monthly Gross Rental Income divided by the Mortgage Payment. Mortgage Payment should be based on revert rate, if revert rate higher than current pay rate | {NUMERIC} | *AR156* |
| ED11_RREC | **Collateral information section** | Original Foreclosure Value | The original foreclosure value of the property | {MONETARY} | |
| ED12_RRE C | **Collateral information section** | Ipoteca | The ipoteca value of the property | {MONETARY} | *AR150* |
| ED13_RREC | **Collateral information section** | Recovery Costs (including legal fees for this period) | Any recovery costs for the foreclosed property for this period | {MONETARY} | |
| ED14_RREC | **Collateral information section** | Gross Annual Rental Income | Gross Annual Rental income for Buy To Let (BTL) properties.If there are multiple properties, use the aggregated balance. For the case of multiple loans, use a pro-rata balance for each loan. | {MONETARY} | *AR154* |
| ED15_RREC | **Collateral information section** | Rent Receiver Event | Indicate if Mortgage Providers have appointed a Receiver of Rent for BTL properties where the owner is unable to make the mortgage payments. This person directly collects the rent and pays the proceeds to the mortgage company | {ALPHANUM-1000} | |
| ED16_RREC | **Collateral information section** | CPC Debt | This is the borrowers share of debt taken out by the housing association associated with the property | {PERCENTAGE} | |
| ED17_RREC | **Collateral information section** | Other Amounts Owed | Any other amounts owed by the borrower | {MONETARY} | |
| ED18_RREC | **Collateral information section** | Number of Properties owned by the borrower | The number of properties owned by the borrower to identify professional landlords in the buy-to-let space. Interest rate type: | {INTEGER-1000} | |
| ED1_AUTL | **Underlying exposures information section** | Interest Rate Type | Floating rate loan (for life) - FLTR Floating rate loan linked to Libor, Euribor, BoE reverting to the Bank's standard variable rate (SVR), ECB reverting to Bank's SVR - FLTL Fixed rate loan (for life) - FXDL Fixed with future periodic resets - FXDR Fixed rate loan with compulsory future switch to floating - FXDF Capped - CAPP Discount -DISC Other -OTHR | {LIST} | |
| ED2_AUTL | **Underlying exposures information section** | Interest Revision Date | Date interest rate next changes (e.g. discount margin changes, fixed period ends, loan refixed etc. this is not the next LIBOR reset date). | {DATEFORMAT} | |
| ED3_AUTL | **Underlying exposures information section** | Final Margin / Interest Rate | The margin or interest rate (%) for the loan at the revision date. | {PERCENTAGE} | |
| ED4_AUTL | **Underlying exposures information section** | Repurchase Amount | Loan repurchase price (if applicaple). | {MONETARY} | |
| ED5_AUTL | **Underlying exposures information section** | Account Status Prior to Repurchase | Status of the loan immediatelly prior the repurchase date. Repurchased by Seller - Breach of Representations and Warranties (REBR) Repurchased by Seller - Defaulted (REDF) Repurchased by Seller - Restructured (RERE) Repurchased by Seller - Special Servicing (RESS) Repurchased by Seller - Other Reason (REOT) | {LIST} | |
| ED6_AUTL | **Underlying exposures information section** | Capitalised Insurance Premium | Amount of the insurance premium capitalised with the loan amount. | {MONETARY} | |
| ED7_AUTL | **Underlying exposures information section** | Engine Type | Engine type (e.g. Diesel, Electric, Hybrid PHEV, Hybrid MHEV, Hybrid Other, Petrol) | {LIST} | |
| ED8_AUTL | **Underlying exposures information section** | Emission Engine Standard | Euro Emission Engine Standard | {ALPHANUM-1000} | |
| ED9_AUTL | **Underlying exposures information section** | Balloon Final Amount | Balloon final amount for German balloon contracts with 3-way financing option | {MONETARY} | |
| ED10_AUTL | **Underlying exposures information section** | Year of Registration | Year of the first registration | {YEAR} | |
| ED1_CRPL | **Underlying exposures information section** | Group Company Identifier | Unique group company identifier which identifies the borrowers ultimate parent company | {ALPHANUM-1000} | *AS8* |
| ED2_CRPL | **Underlying exposures information section** | Obligor 1y PD | Originator internal 1 Year PD rating of obligor.Previoulsy Bank Internal Rating | {PERCENTAGE} | |
| ED3_CRPL | **Underlying exposures information section** | Internal Rating Model Name | Internal Identifier of Rating Model used | {ALPHANUM-1000} | |
| ED4_CRPL | **Underlying exposures information section** | IS IRB approved? | Whether the Rating Model used to generate PD is IRB approved | {Y/N} | |
| ED5_CRPL | **Underlying exposures information section** | Last Rating Date | Date of last assignment or update of the rating reported | {DATEFORMAT} | |
| ED6_CRPL | **Underlying exposures information section** | Bank Internal Loss Given Default (LGD) Estimate | Loss Given Default in normal economic conditions. | {PERCENTAGE} | *AS37* |
| ED7_CRPL | **Underlying exposures information section** | Next Payment Date | Date of next payment. | {DATEFORMAT} | *AS67* |
| ED8_CRPL | **Underlying exposures information section** | Securitised Loan Amount | Balance of the securitised loan as of the cut-off date | {MONETARY} | *AS56* |
| ED9_CRPL | **Underlying exposures information section** | Payment Type | Direct Debit (1) - DDEB | {LIST} | *AS68* |
| | | | Standing Order (2)-STNO | | |
| | | | Cheque (3) - CHEQ | | |
| | | | Cash (4) - CASH | | |
| | | | Other (5) - OTHR | | |
| ED10_CRPL | **Underlying exposures information section** | Interest Grace Period End Date | If applicable, indicate the current interest grace period end date | {DATEFORMAT} | *AS71* |
| ED11_CRPL | **Underlying exposures information section** | Default or Foreclosure on the Loan per the Transaction Definition | Whether there has been a default or foreclosure on the loan per the transaction definition. | {Y/N} | *AS121* |
| ED12_CRPL | **Underlying exposures information section** | Date Loss Allocated | The date when the loss was allocated. | {DATEFORMAT} | *AS134* |
| ED13_CRPI | **Underlying exposures information section** | Obligor Postcode | Obligor Postcode - First 2 or 3 characters must be provided at a minimum. Do not supply the full postcode | {ALPHANUM-1000} | *AS16* |
| ED14_CRPI | **Underlying exposures information section** | Obligor Legal Form / Business Type | Public Company (1) - PUBL | {LIST} | *AS18* |
| | | | Limited Company (2) - LMTD | | |
| | | | Partnership (3) - PART | | |
| | | | Individual (4) - INDV | | |
| | | | Other (5) - OTHR | | |
| ED15_CRPL | **Underlying exposures information section** | Total Credit Limit Used | Total credit limit less the total credit-drawn | {MONETARY} | *AS28* |
| ED16_ CRPL | **Underlying exposures information section** | Last Internal Obligor Rating Review | Date of last internal review of obligor. | {DATEFORMAT} | *AS31* |
| ED17_CRPL | **Underlying exposures information section** | Obligor Incorporation Date | The date for the obligor incorporation | {DATEFORMAT} | AS19 |
| ED1_CRPC | **Collateral information section** | Unconditional Personal Guarantee Amount | Unconditional Personal Guarantee Amount | {MONETARY} | *CS18* |
| ED2_CRPC | **Collateral information section** | Property Postcode | First 2 or 3 characters must be provided at a minimum. Do not supply the full postcode. See Taxonomy for relevant choices. | {ALPHANUM-1000} | *CS16* |
| ED3_CRPC | **Collateral information section** | Mortgage Deed Registration Amount | Mortgage Deed Registration Amount | {MONETARY} | |
| ED4_CRPC | **Collateral information section** | Finished Property | Is the property finished? | {Y/N} | *CS7* |
| ED5_CRPC | **Collateral information section** | Mortgage Value | Indicate the mortgage security ranking or if it is pro-rata with other nonsecutitised assets | {MONETARY} | |
| ED1_LESL | **Underlying exposures information section** | Interest Rate Type | Interest rate type: | {LIST} | |
| | | | Floating rate loan (for life) - FLTR Floating rate loan linked to Libor, Euribor, BoE reverting to the Bank's standard variable rate (SVR), ECB reverting to Bank's SVR - FLTL Fixed rate loan (for life) - FXDL | | |
| | | | Fixed with future periodic resets - FXDR Fixed rate loan with compulsory future switch to floating - FXDF Capped - CAPP Discount -DISC Other -OTHR | | |
| ED2_LESL | **Underlying exposures information section** | Interest Revision Date | Date interest rate next changes (e.g. discount margin changes, fixed period ends, loan refixed etc. this is not the next LIBOR reset date). | {DATEFORMAT} | |
| ED3_LESL | **Underlying exposures information section** | Final Margin | The margin (%) for the loan at the revision date. | {PERCENTAGE} | |
| ED4_LESL | **Underlying exposures information section** | Interest Rate at Revision Date | Interest rate (%) for the loan at the revision date. | {PERCENTAGE} | |
| ED5_LESL | **Underlying exposures information section** | Repurchase Amount | Loan repurchase price (if applicaple). | {MONETARY} | |
| ED6_LESL | **Underlying exposures information section** | Account Status prior to Repurchase | Status of the loan immdeatly prior the repurchase date. Repurchased by Seller - Breach of Representations and Warranties (REBR) Repurchased by Seller - Defaulted (REDF) Repurchased by Seller - Restructured (RERE) Repurchased by Seller - Special Servicing (RESS) Repurchased by Seller - Other Reason (REOT) | {LIST} | |
| ED7_LESL | **Underlying exposures information section** | Lessee's group | Lessee's group | {ALPHANUM-100} | |
| ED8_LESL | **Underlying exposures information section** | Obligor Incorporation Date | Date of obligor incorporation | {DATEFORMAT} | *AL19* |
| ED9_LESL | **Underlying exposures information section** | Interest Grace Period End Date | Interest Grace Period End Date | {DATEFORMAT} | |
| ED10_LESL | **Underlying exposures information section** | Payment Method | Usual method of payment (can be based upon last payment received): Direct Debit (1) - DRDB Standing Order (2) - STNO Cheque (3) - CHEQ Cash (4) - CASH Other (5) - OTHR "Bank transfer (not direct debit) (6) - NDDB | {LIST} | *AL66* |
| ED11_LESL | **Underlying exposures information section** | Asset Identifier | Asset identifier | {ALPHANUM-100} | |
| ED12_LESL | **Underlying exposures information section** | Engine Type | Engine type (e.g. Diesel, Electric, Hybrid PHEV, Hybrid MHEV, Hybrid Other, Petrol) | {ALPHANUM-100} | |
| ED1_CMRL | **Underlying exposures information section** | Interest Rate Type | Interest rate type: | {LIST} | |
| | | | Floating rate loan (for life) - FLTR Floating rate loan linked to Libor, Euribor, BoE reverting to the Bank's standard variable rate (SVR), ECB reverting to Bank's SVR - FLTL Fixed rate loan (for life) - FXDL | | |
| | | | Fixed with future periodic resets - FXDR Fixed rate loan with compulsory future switch to floating - FXDF Capped - CAPP Discount -DISC Other -OTHR | | |
| ED2_CMRL | **Underlying exposures information section** | Interest Revision Date | Date interest rate next changes (e.g. discount margin changes, fixed period ends, loan refixed etc. this is not the next LIBOR reset date). | NO | |
| ED3_CMRL | **Underlying exposures information section** | Final Margin / Interest Rate | The margin or interest rate (%) for the loan at the revision date. | {PERCENTAGE} | |
| ED4_CMRI | **Underlying exposures information section** | Repurchase Amount | Loan repurchase price (if applicaple). | {MONETARY} | |
| ED5_CMRL | **Underlying exposures information section** | Account Status prior to Repurchase | Status of the loan immdeatly prior the repurchase date. Repurchased by Seller - Breach of Representations and Warranties (REBR) Repurchased by Seller - Defaulted (REDF) Repurchased by Seller - Restructured (RERE) Repurchased by Seller - Special Servicing (RESS) Repurchased by Seller - Other Reason (REOT) | {LIST} | |
| ED6_CMRL | **Underlying exposures information section** | Capitalised Insurance Premium | Amount of the insurance premium capitalised with the loan amount. | {MONETARY} | |
| ED7_CMRL | **Underlying exposures information section** | Obligor Birth Date | Obligor date of birth. | {DATEFORMAT} | |
| ED8_CMRL | **Underlying exposures information section** | Employer Name | Employer Name for personal loan secured by Salary or Pension Assignment (CONSL5). | {ALPHANUM-100} | |
| ED9_CMRL | **Underlying exposures information section** | Employer Type | Employer Type Public Public - PUBL, Private - PRVT , Public Pension Provider - PPPV) for personal loan secured by Salary or Pension Assignment (CONSL5) | {LIST} | |
| ED10_CMRL | **Underlying exposures information section** | Insurance Provider Name | Name of insurance provider. Personal loan secured by Salary or Pension Assignment (CONSL5). | {ALPHANUM-100} | |
| ED11_CMRL | **Underlying exposures information section** | Insurance Coverage Description | Insurance coverage description (e.g. "Employment Insurance" or "Death Insurance") for personal loan secured by Salary or Pension Assignment (CONSL5). | {ALPHANUM-100} | |
| ED12_CMRL | **Underlying exposures information section** | Delegazione di Pagamento or Cessione Del Quinto? | "Delegazione Di Pagamento" from "Cessione Del Quinto" for personal loan secured by Salary or Pension Assignment (CONSL5) in Italy. | {ALPHANUM-100} | |
| ED13_CMRL | **Underlying exposures information section** | TFR Amount | "TFR" amount for personal loan secured by Salary or Pension Assignment (CONSL5) in Italy. | {MONETARY} | |
| ED14_CMRL | **Underlying exposures information section** | Payment Holidays | The payment holidays taken | {Y/N} | |
| ED15_CMRL | **Underlying exposures information section** | Vendor of Point of Sale | Vendor of point of sale - this is important for point of sale (POS) consumer loans | {ALPHANUM-100} | |
| ED1_CCDL | **Underlying exposures information section** | Interest Rate Type | Interest rate type: | {LIST} | |
| | | | Floating rate loan (for life) - FLTR | | |
| | | | Floating rate loan linked to Libor, Euribor, BoE reverting to the Bank's standard variable rate (SVR), ECB reverting to Bank's SVR - FLTL Fixed rate loan (for life) - FXDL | | |
| | | | Fixed with future periodic resets - FXDR Fixed rate loan with compulsory future switch to floating - FXDF | | |
| | | | Capped - CAPP | | |
| | | | Discount -DISC | | |
| | | | Other -OTHR | | |
| ED2_CCDL | **Underlying exposures information section** | Interest Revision Date | Date interest rate next changes (e.g. discount margin changes, fixed period ends, loan refixed etc. this is not the next LIBOR reset date). | {DATEFORMAT} | |
| ED3_CCDL | **Underlying exposures information section** | Final Margin / Interest Rate | The margin or interest rate (%) for the loan at the revision date. | {PERCENTAGE} | |
| ED4_CCDL | **Underlying exposures information section** | Repurchase Amount | Loan repurchase price (if applicaple). | {MONETARY} | |
| D5_CCDL | **Underlying exposures information section** | Account Status prior to Repurchase | Status of the loan immediatelly prior the repurchase date. Repurchased by Seller - Breach of Representations and Warranties (REBR) Repurchased by Seller - Defaulted (REDF) Repurchased by Seller - Restructured (RERE) Repurchased by Seller - Special Servicing (RESS) Repurchased by Seller - Other Reason (REOT) | {LIST} | |
| ED1_CREL | **Underlying exposures information section** | Subordinated Debt at Cut Off Date | Used to determine if other third party debt exists for a borrower group, even if this is secured by a second ranking mortgage or by mezzanine security on a parent entity only. | {MONETARY} | |
| ED2_CREL | **Underlying exposures information section** | Subordinated Debt at Loan Maturity | Used to determine if other third party debt exists for a borrower group, even if this is secured by a second ranking mortgage or by mezzanine security on a parent entity only. | {MONETARY} | |
| ED3_CREL | **Underlying exposures information section** | Subordinated Debt Maturity Date | Used to determine if other third party debt exists for a borrower group, even if this is secured by a second ranking mortgage or by mezzanine security on a parent entity only. | {DATE} | |
| ED4_CREL | **Underlying exposures information section** | Not Securitized Senior Loan Parts | Not securitized loan amount - senior ranked | {MONETARY} | |
| ED5_CREL | **Underlying exposures information section** | Not Securitized equally Ranked Loan Parts | Not securitized loans - equally ranked | {MONETARY} | |
| ED6_CREL | **Underlying exposures information section** | Break Option Date | This is required to understand if the rental income is available until lease expiry or not. | {DATEFORMAT} | |
| ED7_CREL | **Underlying exposures information section** | Hedging Information | Hedging information | {ALPHANUM-1000} | |
| ED8_CREL | **Underlying exposures information section** | Tenant (unit by unit) | To be used in case there is the same tenant in buildings securing different loans, hence a unit by unit setup of the tape in relation to tenant income, space and expenses is relevant | {ALPHANUM-1000} | |
| ED9_CREL | **Underlying exposures information section** | Average Daily Rate | The average price per night in a hotel | {MONETARY} | |
| ED10_CREL | **Underlying exposures information section** | RevPAR | "Revenue per Available Room" is the product of "Average Daily Rate" (the average price per night in a hotel) multiplied by the "Occupancy Rate" | {MONETARY} | |
| ED11_CREL | **Underlying exposures information section** | FF&E Reserve | "Fixtures, Furniture & Equipment" comprises all expenditures for the replacement of furniture, technical equipment, bed etc. in hotel rooms | {MONETARY} | |
| ED1_CREC | **Collateral information section** | Market Rent | | {MONETARY} | |
| ED1_lVSS | **Securitisation information section** | Payment Date | Next Payment date | {DATEFORMAT} | |
| ED2_IVSS | **Securitisation information section** | Legal Maturity Date | Legal maturity date | {DATEFORMAT} | |
| ED3_IVSS | **Securitisation information section** | Principal Outstanding Balance | Aggregated Principal outstanding pool balance. Including defaulted loans | {MONETARY} | |
| ED4_IVSS | **Securitisation information section** | Cumulative Additions | Additional receivables (non revolving transactions e.g. prefunding, or tap issuance) | {MONETARY} | |
| ED5_IVSS | **Securitisation information section** | Cumulative Replenishments Amount | Cumulative replenishments amount (revolving transactions) | {MONETARY} | |
| ED6_IVSS | **Securitisation information section** | Replenishments Amount for the Period | Replenishments amount in the period (revolving transactions) | {MONETARY} | |
| ED7_IVSS | **Securitisation information section** | Principal Prepayments in the Period (amount) | Unscheduled principal amount received during last collection period | {MONETARY} | |
| ED8_IVSS | **Securitisation information section** | Cumulative Pre Payments | Unscheduled principal amount received since closing (cumulative) | {MONETARY} | |
| ED9_IVSS | **Securitisation information section** | Principal Outstanding Balance of the Loans in Arrears | Principal outstanding balance of the loans in arrears | {MONETARY} | |
| ED10_IVSS | **Securitisation information section** | Split Between Fixed and Floating Rate Loans | Split between fixed an floating rate loans (number of fixed rate loans/number of floating rate loans) | {PERCENTAGE} | |
| ED11_IVSS | **Securitisation information section** | Weighted Average Interest Rate | Weighted average interest rate | {PERCENTAGE} | |
| ED12_IVSS | **Securitisation information section** | Weighted Average Margin | Weighted average margin only for floating rate loans | {PERCENTAGE} | |
| ED13_IVSS | **Securitisation information section** | Weighted Average Seasoning | Weighted average seasoning | {NUMERIC} | |
| ED14_IVSS | **Securitisation information section** | Weighted Average Remaining Term | Weighted average remaining term | {NUMERIC} | |
| ED15_IVSS | **Securitisation information section** | Weighted Average LTV | Weighted average Current LTV | {PERCENTAGE} | |
| ED16_IVSS | **Securitisation information section** | Portfolio WA Loan Term | in months | {NUMERIC} | |
| ED17_IVSS | **Securitisation information section** | Current Reserves | The balance of funds on deposit in the reserve account | {MONETARY} | |
| ED18_IVSS | **Securitisation information section** | Reserves Target Balance | The amount of funds that would be on deposit in the reserve account when it is fully funded | {MONETARY} | |
| ED19_IVSS | **Securitisation information section** | PCP Handbacks Cumulative Amount | Cumulative amount of PCP hand backs materialized during the reporting period (PCP=Personal Contract Purchase) | {MONETARY} | |
| ED20_IVSS | **Securitisation information section** | PCP Recovery - Cumulative | Cumulative proceeds arising under the Residual Value Contract due to return or repossession (PCP=Personal Contract Purchase) | {MONETARY} | |
| ED21_IVSS | **Securitisation information section** | PCP Actual Returns | Any collections from the Residual Value Contract (PCP= Personal Contract Purchase) during the collection period | {MONETARY} | |
| ED22_IVSS | **Securitisation information section** | PCP Negative Adjustment | In respect of the Residual Value Contract, the difference between the actual proceeds and expected proceeds of vehicle sales. (PCP= Personal Contract Purchase) | {MONETARY} | |
| ED23_IVSS | **Securitisation information section** | PCP Inventory | The aggregate receivables that relates to Residual Value Contract as the end of collection period (PCP= Personal Contract Purchase) | {MONETARY} | |
| ED24_IVSS | **Securitisation information section** | Are arrears reported including or excluding repossessions? | Are arrears reported including or excluding repossessions? | {Y/N} | |
| ED25_IVSS | **Securitisation information section** | WALTV Indexed | Weighted Average Current Loan To Value Indexed | {PERCENTAGE} | |
| ED26_IVSS | **Securitisation information section** | Portion of Interest Only Loans | Percentage of the amount in the pool with repayment method of interest only | {PERCENTAGE} | |
| ED27_IVSS | **Securitisation information section** | Loans in Grace Period | Percentage of loans in the pool in Grace Period | {PERCENTAGE} | |
| ED28_IVSS | **Securitisation information section** | 120 day Delinquent Balance | 120+ day delinquent balance | {MONETARY} | |
| ED29_IVSS | **Securitisation information section** | 150 day Delinquent Balance | 150+ day delinquent balance | {MONETARY} | |
| ED30_IVSS | **Securitisation information section** | 180+ day Delinquent Balance | 180+ day delinquent balance | {MONETARY} | |
| ED31_IVSS | **Securitisation information section** | 30 day Delinquent Balance | 30+ day delinquent balance | {MONETARY} | |
| ED32_IVSS | **Securitisation information section** | 60 day Delinquent Balance | 60+ day delinquent balance | {MONETARY} | |
| ED33_IVSS | **Securitisation information section** | 90 day Delinquent Balance | 90+ day delinquent balance | {MONETARY} | |
| ED34_IVSS | **Securitisation information section** | Cumulative Principal Gross Loss | Cumulative Principal Gross Loss including accrued interest and processing expenses | {MONETARY} | |
| ED35_IVSS | **Securitisation information section** | Cumulative Principal Net Loss | Cumulative Principal Net Loss, excluding processing expenses and accrued interest | {MONETARY} | |
| ED36_IVSS | **Securitisation information section** | Principal Net Loss in the period | Principal Net Loss in the period including accrued interest and excluding processing expenses | {MONETARY} | |
| ED37_IVSS | **Securitisation information section** | Outstanding Foreclosure balance | Outstanding balance of loans at Foreclosure | {MONETARY} | |
| ED38_IVSS | **Securitisation information section** | Cumulative Foreclosure Balance | Cumulative Balance of loans at Foreclosure | {MONETARY} | |
| ED39_IVSS | **Securitisation information section** | Foreclosure Balance Count | Cumulative number of loans with properties Foreclosed | {NUMERIC} | |
| ED40_IVSS | **Securitisation information section** | Cumulative Principal Recoveries | Cumulative Principal Recoveries | {MONETARY} | |
| ED41_IVSS | **Securitisation information section** | Cumulative Recoveries | Cumulative Recoveries regardless of the source | {MONETARY} | |
| ED42_IVSS | **Securitisation information section** | Real Estate Owned Balance | Oustanding Balance of loans owned by real estate during the collection period | {MONETARY} | |
| ED43_IVSS | **Securitisation information section** | Weighted Average Coupon/ Loan Coupon | Weighted average coupon/ Loan coupon | {PERCENTAGE} | |
| ED44_IVSS | **Securitisation information section** | Interest Accrued | Interest Accrued in the Period | {MONETARY} | |
| ED45_IVSS | **Securitisation information section** | Interest Shortfall | Interest shortfall in the Period | {MONETARY} | |
| ED46_IVSS | **Underlying exposures information section** | Interest Deferred | Report as part of priority of payments | {MONETARY} | |
| ED47_IVSS | **Securitisation information section** | Job Insurance Provider | Name of the insurance company covering unemployment risk on Italian CDQ ABS transactions | {ALPHANUM-1000} | |
| ED48_IVSS | **Securitisation information section** | Life Insurance Provider | Name of the insurance company covering death risk on Italian CDQ ABS transactions | {ALPHANUM-1000} | |
| ED49_IVSS | **Securitisation information section** | Next Calculation Date | Next Calculation Date | {DATEFORMAT} | |
| ED50_IVSS | **Securitisation information section** | UW WA Pool LTV | Underwritten weighted average Loan to Value calculation for the pool | {PERCENTAGE} | |
| ED51_IVSS | **Securitisation information section** | UW WA Pool ICR | Underwritten weighted average Interest Coverage Ratio calculation for the pool | {PERCENTAGE} | |
| ED52_IVSS | **Securitisation information section** | UW WA Pool DSCR | Underwritten weighted average Debt Service Coverage Ratio calculation for the pool | {PERCENTAGE} | |
| ED53_IVSS | **Securitisation information section** | Cumulative Number of Loans in Default | Cumulative number of loans in default since inception | {INTEGER-100000} | |
| ED54_IVSS | **Securitisation information section** | Number of Loans in Arrears in the Period | Number of loans in arrears in the period | {INTEGER-100000} | |
| ED55_IVSS | **Securitisation information section** | Cumulative Number of Loans with Losses | Cumulative number of loans with allocated losses, including partially allocated | {INTEGER-100000} | |
| ED56_IVSS | **Securitisation information section** | Loans in Breach of Covenants | Number of loans in Breach of covenants in the period | {INTEGER-100000} | |
| ED57_IVSS | **Securitisation information section** | Pool Vacancy Rate | Pool vacancy rate by loan value | {PERCENTAGE} | |
| ED58_IVSS | **Securitisation information section** | Pool Lease Expiry Profile | Pool lease expiry profile by rental income. Percentage of rental income of expiring leases within the next three years considering break options; for the pool the wieighting should be by loan value. | {PERCENTAGE} | |
| ED59_IVSS | **Securitisation information section** | Gross Cumulative Defaults | Gross Cumulative Defaults | {MONETARY} | |
| ED60_IVSS | **Securitisation information section** | Period Defaults | Gross Period Defaults | {MONETARY} | |
| ED61_IVSS | **Securitisation information section** | Principal Amortised | Principal amortised in the period | {MONETARY} | |
| ED62_IVSS | **Securitisation information section** | WAC | Yield paid on the liabilities for the next coupon | {PERCENTAGE} | |
| ED63_IVSS | **Securitisation information section** | Transaction Definitions | Including default definitions, repossessions, etc. | {ALPHANUM-1000} | |
| ED64_IVSS | **Securitisation information section** | Net Excess Spread | Net Excess Spread after losses have been absorbed | {PERCENTAGE} | |
| ED65_IVSS | **Securitisation information section** | Fixed Interest Amount | Collected interest amount in the period from Fixed loans | {MONETARY} | |
| ED66_IVSS | **Securitisation information section** | Drawings Under Liquidity Facility Amount | Amount drawn under the liquidity facility in the period ending on the last interest payment date | {MONETARY} | |
| ED67_IVSS | **Securitisation information section** | Properties Sold Amount for the Period | Loan outstanding balance | {MONETARY} | |
| ED68_IVSS | **Securitisation information section** | Properties Sold Cumulative Amount | Loan outstanding balance cumulative | {MONETARY} | |
| ED69_IVSS | **Securitisation information section** | Repossessions Outstanding Amount | Repossessions Outstanding Amount | {MONETARY} | |
| ED70_IVSS | **Securitisation information section** | Repossessions Cumulative Amount | Repossessions Cumulative Amount | {MONETARY} | |
| ED71_IVSS | **Securitisation information section** | Substitutions Amount for the Period | Substitutions amount for the period | {MONETARY} | |
| ED72_IVSS | **Securitisation information section** | Substitutions Cumulative Amount | Substitutions cumulative Amount | {MONETARY} | |
| ED73_IVSS | **Underlying exposures information section** | VT Amount in the Period | Voluntary Termination Amount in the period | {MONETARY} | |
| ED74_IVSS | **Underlying exposures information section** | Cumulative VT Amount | Cumulative Voluntary Termination Amount | {MONETARY} | |
| ED75_IVSS | **Underlying exposures information section** | VT Periodic Recoveries Amount | Voluntary Termination Periodic Recoveries Amount | {MONETARY} | |
| ED76_IVSS | **Underlying exposures information section** | VT Recoveries Amount Cumulative | Voluntary Termination Recoveries Amount Cumulative | {MONETARY} | |
| ED77_IVSS | **Underlying exposures information section** | Legal & Procedure Costs Cumulative | Legal & Procedure Costs Cumulative | {MONETARY} | |
| ED78_IVSS | **Underlying exposures information section** | Legal & Procedures Fees cumulative | Legal & Procedures Fees cumulative | {MONETARY} | |
| ED79_IVSS | **Underlying exposures information section** | Legal Procedure Costs in the Period | Legal Procedure Costs in the period | {MONETARY} | |
| ED80_IVSS | **Underlying exposures information section** | Expected gross Cumulative Collections as per the Original Business Plan | Gross value with original business plan | {MONETARY} | |
| ED81_IVSS | **Underlying exposures information section** | Expected Gross Cumulative Collections as per Updated Business Plan | Expected gross cumulative collections as per updated business plan | {MONETARY} | |
| ED82_IVSS | **Underlying exposures information section** | Expected Net Cumulative Collections as per Original Business Plan | Expected net cumulative collections as per original business plan | {MONETARY} | |
| ED83_IVSS | **Underlying exposures information section** | Expected Net Cumulative Collections as per Updated Business Plan | Expected net cumulative collections as per updated business plan | {MONETARY} | |
| ED84_IVSS | **Underlying exposures information section** | Revised Business Plan (at least for the immediately following periods) | Provide in each reporting period, including details on how servicer derives Gross Proceeds and Net Proceeds and costs grouped by Legal & Procedure Costs and Servicing Fees, for number of periods. | {ALPHANUM-1000} | |
| ED85_IVSS | **Underlying exposures information section** | Period Gross Collections before Deduction of Fees and Costs | Period gross collections before deduction of fees and costs | {MONETARY} | |
| ED86_IVSS | **Underlying exposures information section** | Period Net Collections after Deduction of Costs (or recovery expenses) | Period net collections after deduction of costs (or recovery expenses) | {MONETARY} | |
| ED87_IVSS | **Underlying exposures information section** | Period Net Collections after Deduction of Fees and Costs | Period net collections after deduction of fees and costs | {MONETARY} | |
| ED88_IVSS | **Underlying exposures information section** | Information on Profitability for Fully Closed and Fully Resolved Debtors | "NPV Cumulative Profitability Ratios" for a given payment date: sum (NPV of the net collections of the debt relationship of all debt relationships that are exhausted debt relationship) / sum (target price of all debt relationships which are exhausted debt relationship) | {PERCENTAGE} | |
| ED89_IVSS | **Underlying exposures information section** | Gross Book Value at the End of Period | Gross book value at the end of period | {MONETARY} | |
| ED90_IVSS | **Underlying exposures information section** | Information on GACS Costs for Remaining Life of Transaction - Accrued Value | Information on GACS costs for remaining life of transaction - Accrued value | {MONETARY} | |
| ED91_IVSS | **Underlying exposures information section** | Information on GACS Costs for Remaining Life of Transaction - Paid Value | Information on GACS costs for remaining life of transaction - Paid value | {MONETARY} | |
| ED92_IVSS | **Underlying exposures information section** | Credit Events in the period | Sum of outstanding balance of all loans with a credit event in this period | {MONETARY} | |
| ED93_IVSS | **Securitisation information section** | Cumulative Credit Events (amount) | Sum of outstanding balance of all loans with a credit event since inception of the transaction | {MONETARY} | |
| ED94_IVSS | **Underlying exposures information section** | Loss on the Tranche (write-down), for Synthetic Deals Only | Loss on the tranche (write-down), for synthetic deals only | {MONETARY} | |
| ED95_IVSS | **Underlying exposures information section** | Receiver of Rent Outstanding Amount | Receiver of rent outstanding amount | {MONETARY} | |
| ED96_IVSS | **Underlying exposures information section** | Split Collections by Type of Proceeds | Judicial proceeds(JDPR); | {LIST} | |
| | | | DPO proceeds(DPOP); | | |
| | | | Discount payoff(DSCP); | | |
| | | | Out of court settlements(OOCS) ; | | |
| | | | Foreclosure proceeds(FRCP); | | |
| | | | Bankruptcy proceeds(BNKP) ; | | |
| | | | Note sales(NTSL); | | |
| | | | Sales of receivables or loan sale(SRLS); | | |
| | | | Confidi(CNFD); | | |
| | | | Indemnity / Giveback(IDGB); | | |
| | | | Repurchase of receivables(RORV); | | |
| | | | REO proceeds(REOP); | | |
| | | | Other(OTHR); | | |
| | | | Not allocated(NTAL); | | |
| | | | Interim collections(ITMC); | | |
| | | | Settlements(STTL); | | |
| | | | Full payment plans(FPPN); | | |
| | | | Regular payment(REGP); | | |
| | | | One-off payment(OOPM); | | |
| | | | Legal payments(LGPM); | | |
| | | | Putbacks(PTBK); | | |
| | | | Payment agreement(PMTA); | | |
| | | | Amicable sales(AMCS); | | |
| | | | Cash in Court(CSHC); | | |
| | | | Other amicable collections (OACL) | | |
| ED97_IVSS | **Underlying exposures information section** | Legal & Procedures Fees in the Period | Legal & Procedures Fees in the period | {MONETARY} | |
| ED1_NPEL | **Underlying exposures information section** | Loan type - secured vs unsecured | flag for loan SECR/USEC | {LIST} | |
| ED2_NPEL | **Underlying exposures information section** | DPO | if there has been a DPO | {Y/N} | |
| ED3_NPEL | **Underlying exposures information section** | Cash in Court | Cash in court to be received | {MONETARY} | |
| ED4_NPEL | **Underlying exposures information section** | Legal Procedure Costs in the period | Legal Procedure Costs in the period | {MONETARY} | |
| ED1_NPEC | **Collateral information section** | Property Type NPL | Type of property securing the loan Property type: | {LIST} | |
| | | | Residential (House, detached or semi-detached) -RESH | | |
| | | | Residential (Flat/Apartment) (2)-RESF | | |
| | | | Residential (Bungalow) (3) RESB | | |
| | | | Residential (Terraced House) (4) - REST | | |
| | | | Multifamily house (properties with more than four units securing one loan) with recourse to the borrower (5) - MULB | | |
| | | | Multifamily house without recourse to the borrower (6)- MULTI | | |
| | | | Partially commercial use (property is used as a residence as well as for commercial use where less than 50% of its value derived from commercial use, e.g. doctor's surgery and house) (7) PARC | | |
| | | | Commercial/business use with recourse to the borrower (8) COMB | | |
| | | | Commercial/business use without recourse to the borrower (9) - COMR | | |
| | | | Land Only (10) - LAND | | |
| | | | Other (11) - OTHR | | |

### Example 3

Input fields with the object asset information in csv-format:
RREL2,RREL3,RREL4,RREL5,RREL7,RREL8,RREL9,RREL10,RREL11, RREL12,RREL13,RREL14,RREL15,RREL16,RREL16_CURRENCY,RREL 17,RREL19,RREL20,RREL20_CURRENCY,RREL21,RREL22,RREL23,R REL24,RREL25,RREL26,RREL27,RREL29,RREL29_CURRENCY,RREL3 0,RREL30_CURRENCY,RREL31,RREL31_CURRENCY,RREL32,RREL3 2_CURRENCY,RREL33,RREL33_CURRENCY,RREL34,RREL35,RREL3 6,RREL37,RREL38,RREL39,RREL39_CURRENCY,RREL40,RREL41 ,RR EL41_CURRENCY,RREL42,RREL43,RREL44,RREL45,RREL46,RREL47, RREL48,RREL49,RREL50,RREL51,RREL52,RREL53,RREL54,RREL55,R REL56,RREL57,RREL58,RREL59,RREL60,RREL61,RREL61_CURRENC Y,RREL62,RREL63,RREL64,RREL64_CURRENCY,RREL65,RREL66,RR EL67,RREL67_CURRENCY,RREL68,RREL69,RREL70,RREL71,RREL71 _CURRENCY,RREL72,RREL73,RREL73_CURRENCY,RREL74,RREL74 _CURRENCY,RREL75,RREL76,RREL77,RREL77_CURRENCY,RREL78, RREL79,RREL80,RREL81,RREL82,RREL83,RREL84,ED1_RREL,ED2_R REL,ED3_RREL,ED4_RREL,ED5_RREL,ED6_RREL,ED7_RREL,ED8_R REL,ED9_RREL,ED10_RREL,ED11_RREL,ED12_RREL,ED13_RREL,ED 14_RREL,ED15_RREL,ED16_RREL,ED17_RREL,ED18_RREL,ED19_RR EL,ED20_RREL,ED21_RREL,ED22_RREL,ED23_RREL,ED24_RREL,ED 25_RREL,ED26_RREL,ED27_RREL,ED28_RREL,ED29_RREL,ED30_RR EL,ED31_RREL,ED32_RREL,ED33_RREL,ED34_RREL,ED35_RREL,ED 36_RREL,ED37_RREL,ED38_RREL,ED39_RREL,ED40_RREL,ED41_RR EL,ED42_RREL, ED43_RREL
Original Underlying Exposure Identifier,New Underlying Exposure Identifier,Original Obligor Identifier,New Obligor Identifier,Pool Addition Date,Date Of Repurchase,Redemption Date,Resident,Geographic Region - Obligor,Geographic Region Classification,Employment Status,Credit Impaired Obligor,Customer Type,Primary Income,RREL16 Currency,Primary Income Type,Primary Income Verification,Secondary Income,RREL20 Currency,Secondary Income Verification,Special Scheme,Origination Date,Maturity Date,Original Term,Origination Channel,Purpose,Original Principal Balance,RREL29 Currency,Current Principal Balance,RREL30 Currency,Prior Principal Balances,RREL31 Currency,Pari Passu Underlying Exposures,RREL32 Currency,Total Credit Limit,RREL33 Currency,Purchase Price,Amortisation Type,Principal Grace Period End Date,Scheduled Principal Payment Frequency,Scheduled Interest Payment Frequency,Payment Due,RREL39 Currency,Debt To Income Ratio,Balloon Amount,RREL41 Currency,lnterest Rate Type,Current Interest Rate,Current Interest Rate Index,Current Interest Rate Index Tenor,Current Interest Rate Margin,lnterest Rate Reset Interval,lnterest Rate Cap,Interest Rate Floor,Revision Margin 1,interest Revision Date 1,Revision Margin 2,Interest Revision Date 2,Revision Margin 3,Interest Revision Date 3,Revised Interest Rate Index,Revised Interest Rate Index Tenor,Number Of Payments Before Securitisation,Percentage Of Prepayments Allowed Per Year, Prepayment Lock-Out End Date,Prepayment Fee,RREL61 Currency, Prepayment Fee End Date,Prepayment Date,Cumulative Prepayments,RREL64 Currency,Date Of Restructuring,Date Last In Arrears,Arrears Balance,RREL67 Currency,Number Of Days In Arrears,Account Status,Reason for Default or Foreclosure,Default Amount,RREL71 Currency,Default Date,Allocated Losses,RREL73 Currency,Cumulative Recoveries,RREL74 Currency,Litigation,Recourse,Deposit Amount,RREL77 Currency,Insurance Or Investment Provider,Original Lender Name,Original Lender Legal Entity Identifier,Original Lender Establishment Country,Originator Name,Originator Legal Entity Identifier,Originator Establishment Country,Foreign National,Restructure Type,Further Advances,Further Advance Date,Repurchased Amount,Last County Court Judgements or Equivalent - Date,Bankruptcy or Individual Voluntary Arrangement Flag,Subsidy,Subsidy Received,Subsidy % Received,Final Margin,Number of Debtors,First-time Buyer,Right to Buy,Number of County Court Judgements or Equivalent - Satisfied ,Value of County Court Judgements or equivalent - Satisfied ,Number of County Court Judgements or Equivalent - Unsatisfied,Value of County Court Judgements or equivalent - unsatisfied ,Prior Repossessions,Previous Mortgage Arrears 0-6 Months,Mortgage Indemnity Guarantee Provider,Mortgage Indemnity Guarantee Attachment Point,Other Prior Balances,Retained Amount,Flexible Loan Amount ,Mortgage Inscription,Mortgage Mandate ,Performance Arrangement Date,ls Borrower Employee of Originator?,Lending Type,Repayment Method,Date that IO Period Finishes,lnflation Cap,Flexible Loan,Subordinated Claims,Borrower Credit Quality,Name of Guarantor,BKR - Registration Date,BKR - Credit Type,BKR - Arrears Code,BKR - Is Coding Cured?,BKR - Credit Amount,BKR - Number of Months Since Cured.

### Example 4

Input fields with the object asset information in csv-format:
RREC2,RREC3,RREC4,RREC5,RREC6,RREC7,RREC8,RREC9,RREC1 0,RREC11,RREC12,RREC13,RREC13_CURRENCY,RREC14,RREC15,R REC16,RREC17,RREC17_CURRENCY,RREC18,RREC19,RREC20,RRE C21,RREC21_CURRENCY,RREC23,ED1_RREC,ED2_RREC,ED3_RRE C,ED4_RREC,ED5_RREC,ED6_RREC,ED7_RREC,ED8_RREC,ED9_RR EC,ED10_RREC,ED11_RREC,ED12_RREC,ED13_RREC,ED14_RREC,E D15_RREC,ED16_RREC,ED17_RREC,ED18_RREC
Underlying Exposure Identifier,Original Collateral Identifier,New Collateral Identifier,Collateral Type,Geographic Region - Collateral,Occupancy Type,Lien,Property Type,Energy Performance Certificate Value,Energy Performance Certificate Provider Name,Current Loan-To-Value,Current Valuation Amount,RREC13 Currency,Current Valuation Method,Current Valuation Date,Original Loan-To-Value,Original Valuation Amount,RREC17 Currency,Original Valuation Method,Original Valuation Date,Date Of Sale,Sale Price,RREC21 Currency,Guarantor Type,Date Last Current,Covered Pool Balance,Confidence Interval for Current Automated Valuation Model Valuation,Provider of Current Automated Valuation Model Valuation,Property Postcode,Current Valuation Type,Occupancy Type - Properties Owned by Borrower,Property Value pro rata or Full Property Value?,Market value or Foreclosure Value?,DSCR,Original Foreclosure Value,Ipoteca,Recovery Costs (including legal fees for this period),Gross Annual Rental Income,Rent Receiver Event,CPC Debt,Other Amounts Owed,Number of Properties Owned by the Borrower.

### Example 5

Input fields with the object asset information in csv-format:
CREL2,CREL3,CREL4,CREL5,CREL7,CREL8,CREL9,CREL10,CREL11, CREL12,CREL13,CREL14,CREL15,CREL16,CREL17,CREL18,CREL19,C REL20,CREL21,CREL23,CREL23_CURRENCY,CREL24,CREL24_CURR ENCY,CREL25,CREL25_CURRENCY,CREL26,CREL26_CURRENCY,CR EL27,CREL27_CURRENCY,CREL28,CREL29,CREL30,CREL31,CREL32, CREL33,CREL34,CREL35,CREL36,CREL37,CREL38,CREL39,CREL40,C REL41,CREL42,CREL43,CREL44,CREL45,CREL46,CREL47,CREL48,CR EL49,CREL50,CREL51,CREL52,CREL52_CURRENCY,CREL53,CREL54, CREL55,CREL56,CREL56_CURRENCY,CREL57,CREL58,CREL60,CREL 61,CREL61_CURRENCY,CREL63,CREL64,CREL64_CURRENCY,CREL 65,CREL65_CURRENCY,CREL66,CREL66_CURRENCY,CREL67,CREL 67_CURRENCY,CREL69,CREL70,CREL71,CREL72,CREL73,CREL74,C REL75,CREL76,CREL77,CREL78,CREL79,CREL80,CREL81,CREL82,CR EL83,CREL83_CURRENCY,CREL85,CREL86,CREL87,CREL88,CREL89, CREL90,CREL91,CREL92,CREL93,CREL94,CREL95,CREL96,CREL96_ CURRENCY,CREL97,CREL98,CREL98_CURRENCY,CREL99,CREL100, CREL101,CREL101_CURRENCY,CREL102,CREL103,CREL104,CREL10 5,CREL105_CURRENCY,CREL106,CREL107,CREL108,CREL109,CREL 110,CREL111,CREL112,CREL113,CREL114,CREL115,CREL116,CREL1 17,CREL118,CREL119,CREL120,CREL121,CREL122,CREL123,CREL12 3_CURRENCY,CREL124,CREL124_CURRENCY,CREL125,CREL125_C URRENCY,CREL126,CREL126_CURRENCY,CREL127,CREL127_CURR ENCY,CREL128,CREL129,CREL129_CURRENCY,CREL130,CREL131,C REL132,CREL132_CURRENCY,CREL133,CREL134,CREL135,CREL135 _CURRENCY,CREL136,CREL137,CREL137_CURRENCY,CREL138,CR EL138_CURRENCY,CREL139,CREL139_CURRENCY,CREL140,CREL14 1,CREL141_CURRENCY,CREL142,CREL143,CREL144,CREL145,CREL 146,CREL147,CREL148,CREL149,CREL150,CREL151,CREL152,CREL1 53,CREL154,CREL155,CREL156,CREL157,CREL157_CURRENCY,CRE L158,CREL159,CREL160,CREL161,CREL161_CURRENCY,CREL162,CR EL163,CREL164,CREL165,CREL166,CREL167,CREL167_CURRENCY,C REL168,CREL168_CURRENCY,CREL169,CREL169_CURRENCY,CREL 170,CREL170_CURRENCY,CREL171,CREL172,CREL173,CREL174,CR EL175,CREL176,CREL177,CREL178,CREL179,CREL180,CREL181,ED1 _CREL,ED2_CREL,ED3_CREL,ED4_CREL,ED5_CREL,ED6_CREL,ED7_ CREL,ED8_CREL,ED9_CREL,ED10_CREL,ED11_CREL
Original Obligor Identifier,New Obligor Identifier,Original Underlying Exposure Identifier,New Underlying Exposure Identifier,Pool Addition Date,Date Of Restructuring,Date Of Repurchase,Date Of Substitution,Redemption Date,Geographic Region - Obligor,Geographic Region Classification,Special Scheme,Origination Date,Start Date Of Amortisation,Maturity Date At Securitisation Date,Maturity Date,Original Term,Duration Of Extension Option,Nature Of Extension Option,Current Principal Balance,CREL23 Currency,Original Principal Balance,CREL24 Currency,Original Principal Balance At Securitisation Date,CREL25 Currency,Committed Undrawn Facility Underlying Exposure Balance,CREL26 Currency,Total Other Amounts Outstanding,CREL27 Currency,Purchase Price,Latest Utilisation Date,Purpose,Structure,Waterfall A-B Pre Enforcement Scheduled Interest Payments,Waterfall A-B Pre Enforcement Scheduled Principal Payments,Principal Payment Allocation To Senior Loan,Waterfall Type,Defaulted Underlying Exposure Purchase Price,Cure Payments Possible?,Restrictions On Sale Of Subordinated Loan?,Subordinated Loan Holder Affiliated To Obligor?,Subordinated Loan Holder Control Of Workout Process,Do Non-Payments On Prior Ranking Claims Constitute A Default Of The Underlying Exposure?,Do Non-Payments On Equal Ranking Underlying Exposures Constitute Default Of Property?, Noteholder Consent,Noteholder Meeting Scheduled,Syndicated,Participation Of SSPE,Consequence For Breach Of Financial Covenant,Financial Information Non-Submission Penalties,Recourse,Recourse - 3rd Party,Servicing Standard,Amounts Held In Escrow,CREL52 Currency,Collection Of Escrows,Collection Of Other Reserves,Trigger For Escrow To Be Held,Target Escrow Amounts / Reserves,CREL56 Currency,Escrow Account Release Conditions,Conditions Of Drawing Cash Reserve,Escrow Payments Currency,Total Reserve Balance,CREL61 Currency,Escrow Trigger Event Occurred,Amounts Added To Escrows In Current Period,CREL64 Currency,Revenue,CREL65 Currency,Operating Expenses At Securitisation Date,CREL66 Currency,Capital Expenditures At Securitisation Date,CREL67 Currency,Obligor Reporting Breach,Debt Service Coverage Ratio Method,Debt Service Coverage Ratio Indicator At Securitisation Date,Most Recent Debt Service Coverage Ratio Indicator,Debt Service Coverage Ratio At The Securitisation Date,Current Debt Service Coverage Ratio,Original Loan-To-Value,Current Loan-To-Value,lnterest Coverage Ratio At The Securitisation Date,Current Interest Coverage Ratio,lnterest Coverage Ratio Method,Number Of Properties At Securitisation Date,Number Of Properties At Data Cut-Off Date,Properties Collateralised To The Underlying Exposure,Property Portfolio Value At Securitisation Date,CREL83 Currency,Status Of Properties,Valuation Date At Securitisation Date,Amortisation Type,Principal Grace Period End Date,Grace Days Allowed,Scheduled Principal Payment Frequency,Scheduled Interest Payment Frequency,Number Of Payments Before Securitisation,Prepayment Terms Description,Prepayment Lock-Out End Date,Yield Maintenance End Date,Prepayment Fee,CREL96 Currency, Prepayment Fee End Date,Unscheduled Principal Collections,CREL98 Currency,Liquidation / Prepayment Date,Liquidation / Prepayment Code,Prepayment Interest Excess / Shortfall,CREL101 Currency,Payment Date,Next Payment Adjustment Date,Next Payment Date,Payment Due,CREL105 Currency,Original Interest Rate,lnterest Rate At The Securitisation Date,First Payment Adjustment Date,lnterest Rate Type,Current Interest Rate,Current Interest Rate Index,Current Interest Rate Index Tenor,Current Interest Rate Margin,lnterest Rate Reset Interval,Current Index Rate,lndex Determination Date,Rounding Increment,Interest Rate Cap,Interest Rate Floor,Current Default Interest Rate,Accrual Of Interest Allowed,Day Count Convention,Total Scheduled Principal & Interest Due,CREL123 Currency,Total Scheduled Principal & Interest Paid,CREL124 Currency,Negative Amortisation,CREL125 Currency,Deferred Interest,CREL126 Currency,Total Shortfalls In Principal & Interest Outstanding,CREL127 Currency,Date Last In Arrears,Arrears Balance,CREL129 Currency,Number Of Days In Arrears,Reason for Default or Foreclosure,Default Amount,CREL132 Currency,Default Date,lnterest In Arrears,Actual Default Interest,CREL135 Currency,Account Status,Allocated Losses,CREL137 Currency,Net Proceeds Received On Liquidation,CREL138 Currency,Liquidation Expense,CREL139 Currency,Expected Timing Of Recoveries,Cumulative Recoveries,CREL141 Currency,Enforcement Start Date,Workout Strategy Code,Modification,Special Servicing Status,Most Recent Special Servicer Transfer Date,Most Recent Primary Servicer Return Date,Non Recoverability Determined,Covenant Breach / Trigger,Date Of Breach,Date Of Breach Cure,Servicer Watchlist Code,Servicer Watchlist Date,lnterest Rate Swap Provider, Interest Rate Swap Provider Legal Entity Identifier, Interest Rate Swap Maturity Date,lnterest Rate Swap Notional,CREL157 Currency,Currency Swap Provider,Currency Swap Provider Legal Entity Identifier,Currency Swap Maturity Date,Currency Swap Notional,CREL161 Currency,Exchange Rate For Swap,Other Swap Provider,Other Swap Provider Legal Entity Identifier,Obligor Must Pay Breakage On Swap,Full Or Partial Termination Event Of Swap For Current Period,Net Periodic Payment Made By Swap Provider,CREL167 Currency,Breakage Costs Due To Underlying Exposure Swap Provider,CREL168 Currency,Shortfall In Payment Of Breakage Costs On Swap,CREL169 Currency,Breakage Costs Due From Swap Counterparty,CREL170 Currency,Next Swap Reset Date,Sponsor,Agent Bank Of Syndication Legal Entity Identifier,Servicer Legal Entity Identifier,Servicer Name,Originator Name,Originator Legal Entity Identifier,Originator Establishment Country,Original Lender Name,Original Lender Legal Entity Identifier,Original Lender Establishment Country,Subordinated Debt at Cut Off Date,Subordinated Debt at Loan Maturity,Subordinated Debt Maturity Date,Not Securitized Senior Loan Parts,Not Securitized equally Ranked Loan Parts,Break Option Date,Hedging Information,Tenant (unit by unit),Average Daily Rate,RevPAR,FF&E Reserve .

### Example 6

Input fields with the object asset information in csv-format:
CREC2,CREC3,CREC4,CREC5,CREC6,CREC7,CREC8,CREC9,CREC1 0,CREC11,CREC12,CREC13,CREC14,CREC15,CREC15_CURRENCY,C REC16,CREC17,CREC18,CREC19,CREC20,CREC21,CREC22,CREC22 _CURRENCY,CREC23,CREC24,CREC25,CREC26,CREC27,CREC28,C REC29,CREC30,CREC31,CREC32,CREC33,CREC34,CREC35,CREC35 _CURRENCY,CREC36,CREC37,CREC37_CURRENCY,CREC38,CREC3 9,CREC40,CREC40_CURRENCY,CREC41,CREC41_CURRENCY,CREC 42,CREC42_CURRENCY,CREC43,CREC43_CURRENCY,CREC44,CRE C45,CREC46,CREC46_CURRENCY,CREC47,CREC48,CREC49,CREC5 0,CREC51,ED1_CREC
Underlying Exposure Identifier,Original Collateral Identifier,New Collateral Identifier,Collateral Type,Property Name,Property Address,Geographic Region - Collateral,Property Post Code,Lien,Property Status,Property Type,Property Form Of Title,Current Valuation Date,Current Valuation Amount,CREC15 Currency,Current Valuation Method,Current Valuation Basis,Original Valuation Method,Collateral Securitisation Date,Allocated Percentage Of Underlying Exposure At Securitisation Date,Current Allocated Underlying Exposure Percentage,Valuation At Securitisation,CREC22 Currency,Name Of Valuer At Securitisation,Date Of Valuation At Securitisation,Year Built,Year Last Renovated,Number Of Units,Net Square Metres,Commercial Area,Residential Area,Net Internal Floor Area Validated,Occupancy As Of Date,Economic Occupancy At Securitisation,Physical Occupancy At Securitisation,Vacant Possession Value At Securitisation Date,CREC35 Currency,Date Of Financials At Securitisation,Net Operating Income At Securitisation,CREC37 Currency,Most Recent Financials As Of Start Date,Most Recent Financials As Of End Date,Most Recent Revenue,CREC40 Currency,Most Recent Operating Expenses,CREC41 Currency,Most Recent Capital Expenditure,CREC42 Currency,Ground Rent Payable,CREC43 Currency,Weighted Average Lease Terms,Property Leasehold Expiry,Contractual Annual Rental Income,CREC46 Currency,Income Expiring 1-12 Months,lncome Expiring 13-24 Months,lncome Expiring 25-36 Months,lncome Expiring 37-48 Months,lncome Expiring 49+ Months,Market Rent.

### Example 7

Input fields with the object asset information in csv-format:
CRET2,CRET3,CRET4,CRET5,CRET6,CRET7,CRET8,CRET8_CURREN CY
Underlying Exposure Identifier,Collateral Identifier,Tenant Identifier,Tenant Name,NACE Industry Code,Date Of Lease Expiration,Rent Payable,CRET8 Currency.

### Example 8

Input fields with the object asset information in csv-format:
CRPL2,CRPL3,CRPL4,CRPL5,CRPL7,CRPL8,CRPL9,CRPL10,CRPL11, CRPL12,CRPL13,CRPL14,CRPL15,CRPL16,CRPL17,CRPL17_CURREN CY,CRPL18,CRPL18_CURRENCY,CRPL19,CRPL19_CURRENCY,CRPL 20,CRPL20_CURRENCY,CRPL21,CRPL21_CURRENCY,CRPL22,CRPL 24,CRPL25,CRPL26,CRPL27,CRPL28,CRPL29,CRPL30,CRPL31,CRPL3 2,CRPL33,CRPL34,CRPL35,CRPL36,CRPL38,CRPL38_CURRENCY,CR PL39,CRPL39_CURRENCY,CRPL40,CRPL40_CURRENCY,CRPL41,CR PL41_CURRENCY,CRPL42,CRPL42_CURRENCY,CRPL43,CRPL44,CR PL45,CRPL45_CURRENCY,CRPL46,CRPL47,CRPL48,CRPL49,CRPL50, CRPL50_CURRENCY,CRPL51,CRPL51_CURRENCY,CRPL52,CRPL53, CRPL54,CRPL55,CRPL56,CRPL57,CRPL58,CRPL59,CRPL60,CRPL61,C RPL62,CRPL63,CRPL64,CRPL65,CRPL66,CRPL67,CRPL68,CRPL69,CR PL70,CRPL71,CRPL71_CURRENCY,CRPL72,CRPL73,CRPL74,CRPL74 _CURRENCY,CRPL75,CRPL76,CRPL77,CRPL77_CURRENCY,CRPL78, CRPL79,CRPL80,CRPL81,CRPL81_CURRENCY,CRPL82,CRPL83,CRPL 83_CURRENCY,CRPL84,CRPL84_CURRENCY,CRPL85,CRPL86,CRPL 87,CRPL87_CURRENCY,CRPL88,CRPL88_CURRENCY,CRPL89,CRPL 90,CRPL91,CRPL92,CRPL92_CURRENCY,CRPL93,CRPL94,CRPL95,C RPL96,CRPL97,CRPL98,CRPL99,CRPL100,CRPL101,ED1_CRPL,ED2_ CRPL,ED3_CRPL,ED4_CRPL,ED5_CRPL,ED6_CRPL,ED7_CRPL,ED8_ CRPL,ED9_CRPL,ED10_CRPL,ED11_CRPL,ED12_CRPL,ED13_CRPI,E D14_CRPI,ED15_CRPL,ED16_CRPL,ED17_CRPL
Original Underlying Exposure Identifier,New Underlying Exposure Identifier,Original Obligor Identifier,New Obligor Identifier,Pool Addition Date,Date Of Repurchase,Redemption Date,Geographic Region - Obligor,Geographic Region Classification,Credit Impaired Obligor,Customer Type,NACE Industry Code,Obligor Basel III Segment,Enterprise Size,Revenue,CRPL17 Currency,Total Debt,CRPL18 Currency,EBITDA,CRPL19 Currency,Enterprise Value,CRPL20 Currency,Free Cashflow,CRPL21 Currency,Date Of Financials,Debt Type,Securitised Receivables,lnternational Securities Identification Number,Seniority,Syndicated,Leveraged Transaction,Managed by CLO,Payment in Kind,Special Scheme,Origination Date,Maturity Date,Origination Channel,Purpose,Original Principal Balance,CRPL38 Currency,Current Principal Balance,CRPL39 Currency,Prior Principal Balances,CRPL40 Currency,Market Value,CRPL41 Currency,Total Credit Limit,CRPL42 Currency,Purchase Price,Put Date,Put Strike,CRPL45 Currency,Amortisation Type,Principal Grace Period End Date,Scheduled Principal Payment Frequency,Scheduled Interest Payment Frequency,Payment Due,CRPL50 Currency,Balloon Amount,CRPL51 Currency, Interest Rate Type,Current Interest Rate,Current Interest Rate Index,Current Interest Rate Index Tenor,Current Interest Rate Margin,lnterest Rate Reset Interval,lnterest Rate Cap,Interest Rate Floor,Revision Margin 1,Interest Revision Date 1,Revision Margin 2,Interest Revision Date 2,Revision Margin 3,Interest Revision Date 3,Revised Interest Rate Index,Revised Interest Rate Index Tenor,Number Of Payments Before Securitisation,Percentage Of Prepayments Allowed Per Year,Prepayment Lock-Out End Date,Prepayment Fee,CRPL71 Currency,Prepayment Fee End Date,Prepayment Date,Cumulative Prepayments,CRPL74 Currency,Date Of Restructuring,Date Last In Arrears,Arrears Balance,CRPL77 Currency,Number Of Days In Arrears,Account Status,Reason for Default or Foreclosure,Default Amount,CRPL81 Currency,Default Date,Allocated Losses,CRPL83 Currency,Cumulative Recoveries,CRPL84 Currency, Recovery Source,Recourse,Deposit Amount,CRPL87 Currency,lnterest Rate Swap Notional,CRPL88 Currency, Interest Rate Swap Provider Legal Entity Identifier,Interest Rate Swap Provider, Interest Rate Swap Maturity Date,Currency Swap Notional,CRPL92 Currency,Currency Swap Provider Legal Entity Identifier,Currency Swap Provider,Currency Swap Maturity Date,Original Lender Name,Original Lender Legal Entity Identifier,Original Lender Establishment Country,Originator Name,Originator Legal Entity Identifier,Originator Establishment Country,Group Company Identifier,Obligor 1y PD,Internal Rating Model Name,IS IRB approved?,Last Rating Date,Bank Internal Loss Given Default (LGD) Estimate,Next Payment Date,Securitised Loan Amount,Payment Type,lnterest Grace Period End Date,Default or Foreclosure on the Loan per the Transaction Definition,Date Loss Allocated,Obligor Postcode ,Obligor Legal Form / Business Type,Total Credit Limit Used,Last Internal Obligor Rating Review,Obligor Incorporation Date.

### Example 9

Input fields with the object asset information in csv-format:
CRPC2,CRPC3,CRPC4,CRPC5,CRPC6,CRPC7,CRPC8,CRPC9,CRPC1 0,CRPC10_CURRENCY,CRPC11,CRPC12,CRPC13,CRPC13_CURREN CY,CRPC14,CRPC15,CRPC16,CRPC17,CRPC17_CURRENCY,CRPC19, CRPC20,ED1_CRPC,ED2_CRPC,ED3_CRPC,ED4_CRPC,ED5_CRPC
Underlying Exposure Identifier,Original Collateral Identifier,New Collateral Identifier,Geographic Region - Collateral,Security Type,Charge Type,Lien,Collateral Type,Current Valuation Amount,CRPC10 Currency,Current Valuation Method,Current Valuation Date,Original Valuation Amount,CRPC13 Currency,Original Valuation Method,Original Valuation Date,Date Of Sale,Sale Price,CRPC17 Currency,Guarantor Country,Guarantor ESA Subsector,Unconditional Personal Guarantee Amount ,Property Postcode,Mortgage Deed Registration Amount,Finished Property,Mortgage Value.

### Example 10

Input fields with the object asset information in csv-format:
AUTL2,AUTL3,AUTL4,AUTL5,AUTL7,AUTL8,AUTL9,AUTL10,AUTL11,AU TL12,AUTL13,AUTL14,AUTL15,AUTL16,AUTL16_CURRENCY,AUTL17,A UTL19,AUTL20,AUTL20_CURRENCY,AUTL22,AUTL23,AUTL24,AUTL25, AUTL26,AUTL27,AUTL29,AUTL29_CURRENCY,AUTL30,AUTL30_CURR ENCY,AUTL31 ,AUTL32,AUTL33,AUTL34,AUTL35,AUTL36,AUTL37,AUTL 37_CURRENCY,AUTL38,AUTL38_CURRENCY,AUTL39,AUTL39_CURR ENCY,AUTL40,AUTL41,AUTL42,AUTL43,AUTL44,AUTL45,AUTL46,AUTL 47,AUTL48,AUTL49,AUTL49-CURRENCY,AUTL50,AUTL51,AUTL52,AU TL52_CURRENCY,AUTL53,AUTL54,AUTL55,AUTL56,AUTL57,AUTL58,A UTL59,AUTL60,AUTL60-CURRENCY,AUTL61,AUTL61_CURRENCY,AU TL62,AUTL62_CURRENCY,AUTL63,AUTL63_CURRENCY,AUTL64,AUT L64_CURRENCY,AUTL65,AUTL66,AUTL67,AUTL68,AUTL68_CURRENC Y,AUTL69,AUTL70,AUTL71,AUTL72,AUTL72_CURRENCY,AUTL73,AUT L74,AUTL74_CURRENCY,AUTL75,AUTL75_CURRENCY,AUTL76,AUTL 76_CURRENCY,AUTL77,AUTL77_CURRENCY,AUTL78,AUTL78_CURR ENCY,AUTL79,AUTL80,AUTL81,AUTL82,AUTL83,AUTL84,ED1_AUTL,E D2_AUTL,ED3_AUTL,ED4_AUTL,ED5_AUTL,ED6_AUTL,ED7_AUTL,ED 8_AUTL,ED9_AUTL,ED10_AUTL
Original Underlying Exposure Identifier,New Underlying Exposure Identifier,Original Obligor Identifier,New Obligor Identifier,Pool Addition Date,Date Of Repurchase,Redemption Date,Geographic Region - Obligor,Geographic Region Classification,Employment Status,Credit Impaired Obligor,Obligor Legal Type,Customer Type,Primary Income,AUTL16 Currency,Primary Income Type,Primary Income Verification,Revenue,AUTL20 Currency,Special Scheme,Product Type,Origination Date,Maturity Date,Original Term,Origination Channel,Original Principal Balance,AUTL29 Currency,Current Principal Balance,AUTL30 Currency,Purchase Price,Amortisation Type,Principal Grace Period End Date,Scheduled Principal Payment Frequency,Scheduled Interest Payment Frequency,Payment Method,Payment Due,AUTL37 Currency,Balloon Amount,AUTL38 Currency,Down Payment Amount,AUTL39 Currency,Current Interest Rate,Current Interest Rate Index,Current Interest Rate Index Tenor,Current Interest Rate Margin,lnterest Rate Reset Interval,Interest Rate Cap,Interest Rate Floor,Number Of Payments Before Securitisation,Percentage Of Prepayments Allowed Per Year,Prepayment Fee,AUTL49 Currency, Prepayment Fee End Date,Prepayment Date,Cumulative Prepayments,AUTL52 Currency,Manufacturer,Model,Year Of Registration,New Or Used,Energy Performance Certificate Value,Energy Performance Certificate Provider Name,Original Loan-To-Value,Original Valuation Amount,AUTL60 Currency,Original Residual Value Of Vehicle,AUTL61 Currency,Option To Buy Price,AUTL62 Currency,Securitised Residual Value,AUTL63 Currency,Updated Residual Value Of Vehicle,AUTL64 Currency,Date Of Updated Residual Valuation Of Vehicle,Date Of Restructuring,Date Last In Arrears,Arrears Balance,AUTL68 Currency,Number Of Days In Arrears,Account Status,Reason for Default or Foreclosure,Default Amount,AUTL72 Currency,Default Date,Allocated Losses,AUTL74 Currency,Residual Value Losses,AUTL75 Currency,Cumulative Recoveries,AUTL76 Currency,Sale Price,AUTL77 Currency,DepositAmount,AUTL78 Currency,Original Lender Name,Original Lender Legal Entity Identifier,Original Lender Establishment Country,Originator Name,Originator Legal Entity Identifier,Originator Establishment Country,Interest Rate Type,lnterest Revision Date,Final Margin / Interest Rate,Repurchase Amount,Account Status Prior to Repurchase,Capitalised Insurance Premium,Engine Type,Emission Engine Standard,Balloon Final Amount ,Year of Registration.

### Example 11

Input fields with the object asset information in csv-format:
CMRL2,CMRL3,CMRL4,CMRL5,CMRL7,CMRL8,CMRL9,CMRL10,CMRL 11,CMRL12,CMRL13,CMRL14,CMRL15,CMRL15_CURRENCY,CMRL16, CMRL18,CMRL19,CMRL20,CMRL21,CMRL22,CMRL23,CMRL24,CMRL2 5,CMRL27,CMRL27_CURRENCY,CMRL28,CMRL28_CURRENCY,CMRL 29,CMRL29_CURRENCY,CMRL30,CMRL31,CMRL32,CMRL33,CMRL34, CMRL35,CMRL36,CMRL36_CURRENCY,CMRL37,CMRL38,CMRL39,CM RL40,CMRL41,CMRL42,CMRL43,CMRL44,CMRL45,CMRL46,CMRL47,C MRL47_CURRENCY,CMRL48,CMRL49,CMRL50,CMRL50_CURRENCY, CMRL51,CMRL52,CMRL53,CMRL53_CURRENCY,CMRL54,CMRL55,CM RL56,CMRL57,CMRL57_CURRENCY,CMRL58,CMRL59,CMRL59_CURR ENCY,CMRL60,CMRL60_CURRENCY,CMRL61,CMRL61_CURRENCY,C MRL62,CMRL63,CMRL64,CMRL65,CMRL66,CMRL67,CMRL68,CMRL69, ED1_CMRL,ED2_CMRL,ED3_CMRL,ED4_CMRI,ED5_CMRL,ED6_CMRL ,ED7_CMRL,ED8_CMRL,ED9_CMRL,ED10_CMRL,ED11_CMRL,ED12_C MRL,ED13_CMRL,ED14_CMRL,ED15_CMRL
Original Underlying Exposure Identifier,New Underlying Exposure Identifier,Original Obligor Identifier,New Obligor Identifier,Pool Addition Date,Date Of Repurchase,Redemption Date,Geographic Region - Obligor,Geographic Region Classification,Employment Status,Credit Impaired Obligor,Customer Type,Primary Income,CMRL15 Currency,Primary Income Type,Primary Income Verification,Secured By Salary / Pension Assignment,Special Scheme,Origination Date,Maturity Date,Original Term,Origination Channel,Purpose,Original Principal Balance,CMRL27 Currency,Current Principal Balance,CMRL28 Currency,Total Credit Limit,CMRL29 Currency,Revolving End Date,Purchase Price,Amortisation Type,Principal Grace Period End Date,Scheduled Principal Payment Frequency,Scheduled Interest Payment Frequency,Payment Due,CMRL36 Currency,Current Interest Rate,Current Interest Rate Index,Current Interest Rate Index Tenor,Current Interest Rate Margin,lnterest Rate Reset Interval,Interest Rate Cap,Interest Rate Floor,Number Of Payments Before Securitisation,Percentage Of Prepayments Allowed Per Year, Prepayment Lock-Out End Date,Prepayment Fee,CMRL47 Currency, Prepayment Fee End Date,Prepayment Date,Cumulative Prepayments,CMRL50 Currency,Date Of Restructuring,Date Last In Arrears,Arrears Balance,CMRL53 Currency,Number Of Days In Arrears,Account Status,Reason for Default or Foreclosure,Default Amount,CMRL57 Currency,Default Date,Allocated Losses,CMRL59 Currency,Cumulative Recoveries,CMRL60 Currency,Deposit Amount,CMRL61 Currency,Original Lender Name,Original Lender Legal Entity Identifier,Original Lender Establishment Country,Originator Name,Originator Legal Entity Identifier,Originator Establishment Country,Energy Performance Certificate Value,Energy Performance Certificate Provider Name,lnterest Rate Type,lnterest Revision Date,Final Margin / Interest Rate,Repurchase Amount,Account Status prior to Repurchase,Capitalised Insurance Premium,Obligor Birth Date,Employer Name ,Employer Type,lnsurance Provider Name ,Insurance Coverage Description,Delegazione di Pagamento or Cessione Del Quinto?,TFR Amount,Payment Holidays ,Vendor of Point of Sale.

### Example 12

Input fields with the object asset information in csv-format:
CCDL2,CCDL3,CCDL4,CCDL5,CCDL7,CCDL8,CCDL9,CCDL10,CCDL11, CCDL12,CCDL13,CCDL14,CCDL14_CURRENCY,CCDL15,CCDL17,CCD L18,CCDL19,CCDL20,CCDL22,CCDL22_CURRENCY,CCDL23,CCDL23_ CURRENCY,CCDL24,CCDL25,CCDL26,CCDL27,CCDL28,CCDL28_CUR RENCY,CCDL29,CCDL30,CCDL31,CCDL32,CCDL33,CCDL34,CCDL35, CCDL36,CCDL36_CURRENCY,CCDL37,CCDL38,CCDL39,CCDL39_CU RRENCY,CCDL40,CCDL41,CCDL41_CURRENCY,CCDL42,CCDL43,CC DL44,CCDL45,CCDL46,CCDL47,ED1_CCDL,ED2_CCDL,ED3_CCDL,ED 4_CCDL,ED5_CCDL

Original Underlying Exposure Identifier,New Underlying Exposure Identifier,Original Obligor Identifier,New Obligor Identifier,Pool Addition Date,Date Of Repurchase,Geographic Region - Obligor,Geographic Region Classification,Employment Status,Credit Impaired Obligor,Customer Type,Primary Income,CCDL14 Currency,Primary Income Type,Primary Income Verification,Special Scheme,Origination Date,Origination Channel,Current Principal Balance,CCDL22 Currency,Total Credit Limit,CCDL23 Currency,Purchase Price,Principal Grace Period End Date,Scheduled Principal Payment Frequency,Scheduled Interest Payment Frequency,Payment Due,CCDL28 Currency,Current Interest Rate,Current Interest Rate Index,Current Interest Rate Index Tenor,Number Of Payments Before Securitisation,Date Of Restructuring,Date Last In Arrears,Number Of Days In Arrears,Arrears Balance,CCDL36 Currency,Account Status,Reason for Default or Foreclosure,Default Amount,CCDL39 Currency,Default Date,Cumulative Recoveries,CCDL41 Currency,Original Lender Name,Original Lender Legal Entity Identifier,Original Lender Establishment Country,Originator Name,Originator Legal Entity Identifier,Originator Establishment Country,Interest Rate Type,lnterest Revision Date,Final Margin / Interest Rate,Repurchase Amount,Account Status prior to Repurchase.

### Example 13

Input fields with the object asset information in csv-format:
LESL2,LESL3,LESL4,LESL5,LESL7,LESL8,LESL9,LESL10,LESL11,LESL 12,LESL13,LESL14,LESL15,LESL16,LESL17,LESL17_CURRENCY,LESL 19,LESL20,LESL21,LESL22,LESL23,LESL24,LESL25,LESL27,LESL27_C URRENCY,LESL28,LESL28_CURRENCY,LESL29,LESL30,LESL30_CUR RENCY,LESL31,LESL32,LESL33,LESL34,LESL35,LESL35_CURRENCY, LESL36,LESL37,LESL38,LESL39,LESL40,LESL41,LESL42,LESL43,LESL 44,LESL45,LESL46,LESL46_CURRENCY,LESL47,LESL48,LESL49,LESL 49_CURRENCY,LESL50,LESL50_CURRENCY,LESL51,LESL51_CURRE NCY,LESL52,LESL52_CURRENCY,LESL53,LESL54,LESL55,LESL55_C URRENCY,LESL56,LESL57,LESL58,LESL59,LESL59_CURRENCY,LESL 60,LESL61,LESL61_CURRENCY,LESL62,LESL62_CURRENCY,LESL63, LESL64,LESL64_CURRENCY,LESL65,LESL66,LESL67,LESL68,LESL69, LESL70,LESL70_CURRENCY,LESL71,LESL72,LESL72_CURRENCY,LE SL73,LESL74,LESL75,LESL75_CURRENCY,LESL76,LESL77,LESL78,LE SL79,LESL80,LESL81,LESL82,LESL83,LESL84,ED1_LESL,ED2_LESL,E D3_LESL,ED4_LESL,ED5_LESL,ED6_LESL,ED7_LESL,ED8_LESL,ED9_ LESL,ED10_LESL,ED11_LESL,ED12_LESL

Original Underlying Exposure Identifier,New Underlying Exposure Identifier,Original Obligor Identifier,New Obligor Identifier,Pool Addition Date,Date Of Repurchase,Redemption Date,Geographic Region - Obligor,Geographic Region Classification,Credit Impaired Obligor,Obligor Basel III Segment,Customer Type,NACE Industry Code,Enterprise Size,Revenue,LESL17 Currency, Product Type,Syndicated,Special Scheme,Origination Date,Maturity Date,Original Term,Origination Channel,Original Principal Balance,LESL27 Currency,Current Principal Balance,LESL28 Currency,Purchase Price,Securitised Residual Value,LESL30 Currency,Amortisation Type,Principal Grace Period End Date,Scheduled Principal Payment Frequency,Scheduled Interest Payment Frequency,Payment Due,LESL35 Currency,Current Interest Rate,Current Interest Rate Index,Current Interest Rate Index Tenor,Current Interest Rate Margin,lnterest Rate Reset Interval,lnterest Rate Cap,Interest Rate Floor,Number Of Payments Before Securitisation,Percentage Of Prepayments Allowed Per Year, Prepayment Lock-Out End Date,Prepayment Fee,LESL46 Currency, Prepayment Fee End Date,Prepayment Date,Cumulative Prepayments,LESL49 Currency,Option To Buy Price,LESL50 Currency,Down Payment Amount,LESL51 Currency,Current Residual Value Of Asset,LESL52 Currency,Date Of Restructuring,Date Last In Arrears,Arrears Balance,LESL55 Currency,Number Of Days In Arrears,Account Status,Reason for Default or Foreclosure,Default Amount,LESL59 Currency,Default Date,Allocated Losses,LESL61 Currency,Cumulative Recoveries,LESL62 Currency,Recovery Source,Deposit Amount,LESL64 Currency,Geographic Region - Collateral,Manufacturer,Model,Year Of Manufacture / Construction,New Or Used,Original Residual Value Of Asset,LESL70 Currency,Collateral Type,Original Valuation Amount,LESL72 Currency,Original Valuation Method,Original Valuation Date,Current Valuation Amount,LESL75 Currency,Current Valuation Method,Current Valuation Date,Number Of Leased Objects,Original Lender Name,Original Lender Legal Entity Identifier,Original Lender Establishment Country,Originator Name,Originator Legal Entity Identifier,Originator Establishment Country,Interest Rate Type,lnterest Revision Date,Final Margin,lnterest Rate at Revision Date,Repurchase Amount,Account Status prior to Repurchase,Lessee's group ,Obligor Incorporation Date,lnterest Grace Period End Date,Payment Method,Asset Identifier,Engine Type.

### Example 14

Input fields with the object asset information in csv-format:
RREL2,RREL3,RREL4,RREL5,RREL7,RREL8,RREL9,RREL10,RREL11, RREL12,RREL13,RREL14,RREL15,RREL16,RREL16_CURRENCY,RREL 17,RREL19,RREL20,RREL20_CURRENCY,RREL21,RREL22,RREL23,R REL24,RREL25,RREL26,RREL27,RREL29,RREL29_CURRENCY,RREL3 0,RREL30-CURRENCY,RREL31,RREL31_CURRENCY,RREL32,RREL3 2_CURRENCY,RREL33,RREL33_CURRENCY,RREL34,RREL35,RREL3 6,RREL37,RREL38,RREL39,RREL39_CURRENCY,RREL40,RREL41,RR EL41_CURRENCY,RREL42,RREL43,RREL44,RREL45,RREL46,RREL47, RREL48,RREL49,RREL50,RREL51,RREL52,RREL53,RREL54,RREL55,R REL56,RREL57,RREL58,RREL59,RREL60,RREL61,RREL61_CURRENC Y,RREL62,RREL63,RREL64,RREL64_CURRENCY,RREL65,RREL66,RR EL67,RREL67_CURRENCY,RREL68,RREL69,RREL70,RREL71,RREL71 _CURRENCY,RREL72,RREL73,RREL73_CURRENCY,RREL74,RREL74 _CURRENCY,RREL75,RREL76,RREL77,RREL77_CURRENCY,RREL78, RREL79,RREL80,RREL81,RREL82,RREL83,RREL84,NPEL7,NPEL8,NP EL9,NPEL10,NPEL11,NPEL12,NPEL13,NPEL14,NPEL15,NPEL16,NPEL1 7,NPEL18,NPEL19,NPEL20,NPEL21,NPEL22,NPEL23,NPEL24,NPEL25, NPEL26,NPEL27,NPEL28,NPEL29,NPEL30,NPEL31,NPEL32,NPEL33,N PEL34,NPEL35,NPEL36,NPEL37,NPEL38,NPEL39,NPEL39_CURRENCY ,NPEL40,NPEL41,NPEL42,NPEL42_CURRENCY,NPEH3,NPEH3_CURR ENCY,NPEH4,NPEH4_CURRENCY,NPEH5,NPEH5_CURRENCY,NPEH 6,NPEH6_CURRENCY,NPEH7,NPEH7_CURRENCY,NPEH8,NPEH8_CU RRENCY,NPEH9,NPEH9_CURRENCY,NPEH10,NPEH10_CURRENCY,N PEH11,NPEH11_CURRENCY,NPEH12,NPEH12_CURRENCY,NPEH13, NPEH13_CURRENCY,NPEH14,NPEH14_CURRENCY,NPEH15,NPEH15 _CURRENCY,NPEH16,NPEH16_CURRENCY,NPEH17,NPEH17_CURRE NCY,NPEH18,NPEH18_CURRENCY,NPEH19,NPEH19_CURRENCY,NP EH20,NPEH20_CURRENCY,NPEH21,NPEH21_CURRENCY,NPEH22,N PEH22_CURRENCY,NPEH23,NPEH23_CURRENCY,NPEH24,NPEH24_ CURRENCY,NPEH25,NPEH25_CURRENCY,NPEH26,NPEH26_CURRE NCY,NPEH27,NPEH27_CURRENCY,NPEH28,NPEH28_CURRENCY,NP EH29,NPEH29_CURRENCY,NPEH30,NPEH30_CURRENCY,NPEH31,N PEH31_CURRENCY,NPEH32,NPEH32_CURRENCY,NPEH33,NPEH33_ CURRENCY,NPEH34,NPEH34_CURRENCY,NPEH35,NPEH35_CURRE NCY,NPEH36,NPEH36_CURRENCY,NPEH37,NPEH37_CURRENCY,NP EH38,NPEH38_CURRENCY,NPEH39,NPEH39_CURRENCY,NPEH40,N PEH40_CURRENCY,NPEH41,NPEH41_CURRENCY,NPEH42,NPEH42_ CURRENCY,NPEH43,NPEH43_CURRENCY,NPEH44,NPEH44_CURRE NCY,NPEH45,NPEH45_CURRENCY,NPEH46,NPEH46_CURRENCY,NP EH47,NPEH47_CURRENCY,NPEH48,NPEH48_CURRENCY,NPEH49,N PEH49_CURRENCY,NPEH50,NPEH50_CURRENCY,NPEH51_,NPEH51_ CURRENCY,NPEH52,NPEH52_CURRENCY,NPEH53,NPEH53_CURRE NCY,NPEH54,NPEH54_CURRENCY,NPEH55,NPEH55_CURRENCY,NP EH56,NPEH56_CURRENCY,NPEH57,NPEH57_CURRENCY,NPEH58,N PEH58_CURRENCY,NPEH59,NPEH59_CURRENCY,NPEH60,NPEH60_ CURRENCY,NPEH61,NPEH61_CURRENCY,NPEH62,NPEH62_CURRE NCY,NPEH63,NPEH63_CURRENCY,NPEH64,NPEH64_CURRENCY,NP EH65,NPEH65_CURRENCY,NPEH66,NPEH66_CURRENCY,NPEH67,N PEH67_CURRENCY,NPEH68,NPEH68_CURRENCY,NPEH69,NPEH69_ CURRENCY,NPEH70,NPEH70_CURRENCY,NPEH71,NPEH71_CURRE NCY,NPEH72,NPEH72_CURRENCY,NPEH73,NPEH73_CURRENCY,NP EH74,NPEH74_CURRENCY,NPEH75,NPEH75_CURRENCY,NPEH76,N PEH76_CURRENCY,NPEH77,NPEH77_CURRENCY,NPEH78,NPEH78_ CURRENCY,NPEH79,NPEH79_CURRENCY,NPEH80,NPEH80_CURRE NCY,NPEH81,NPEH81_CURRENCY,NPEH82,NPEH82_CURRENCY,NP EH83,NPEH83_CURRENCY,NPEH84,NPEH84_CURRENCY,NPEH85,N PEH85_CURRENCY,NPEH86,NPEH86_CURRENCY,NPEH87,NPEH87_ CURRENCY,NPEH88,NPEH88_CURRENCY,NPEH89,NPEH89_CURRE NCY,NPEH90,NPEH90_CURRENCY,NPEH91,NPEH91_CURRENCY,NP EH92,NPEH92_CURRENCY,NPEH93,NPEH93_CURRENCY,NPEH94,N PEH94_CURRENCY,NPEH95,NPEH95_CURRENCY,NPEH96,NPEH96_ CURRENCY,NPEH97,NPEH97_CURRENCY,NPEH98,NPEH98_CURRE NCY,NPEH99,NPEH99_CURRENCY,NPEH100,NPEH100_CURRENCY, NPEH101,NPEH101_CURRENCY,NPEH102,NPEH102_CURRENCY,NP EH103,NPEH103_CURRENCY,NPEH104,NPEH104_CURRENCY,NPEH 105,NPEH105_CURRENCY,NPEH106,NPEH106_CURRENCY,NPEH107 ,NPEH107_CURRENCY,NPEH108,NPEH108_CURRENCY,NPEH109,NP EH109_CURRENCY,NPEH110,NPEH110_CURRENCY,NPEH111,NPEH 111_CURRENCY,NPEH112,NPEH112_CURRENCY,NPEH113,NPEH113 _CURRENCY,NPEH114,NPEH114_CURRENCY,NPEH115,NPEH115_C URRENCY,NPEH116,NPEH116_CURRENCY,NPEH117,NPEH117_CUR RENCY,NPEH118,NPEH118_CURRENCY,NPEH119,NPEH119_CURRE NCY,NPEH120,NPEH120_CURRENCY,NPEH121,NPEH121_CURRENC Y,NPEH122,NPEH122_CURRENCY,NPEH123,NPEH123_CURRENCY,N PEH124,NPEH124_CURRENCY,NPEH125,NPEH125_CURRENCY,NPE H126,NPEH126_CURRENCY,NPEH127,NPEH127_CURRENCY,NPEH12 8,NPEH128_CURRENCY,NPEH129,NPEH129_CURRENCY,NPEH130,N PEH130_CURRENCY,NPEH131,NPEH131_CURRENCY,NPEH132,NPE H132_CURRENCY,NPEH133,NPEH133_CURRENCY,NPEH134,NPEH13 4_CURRENCY,NPEH135,NPEH135_CURRENCY,NPEH136,NPEH136_C URRENCY,NPEH137,NPEH137_CURRENCY,NPEH138,NPEH138_CUR RENCY,NPEH139,NPEH139_CURRENCY,NPEH140,NPEH140_CURRE NCY,NPEH141,NPEH141_CURRENCY,NPEH142,NPEH142_CURRENC Y,NPEH143,NPEH143_CURRENCY,NPEH144,NPEH144_CURRENCY,N PEH145,NPEH145_CURRENCY,NPEH146,NPEH146_CURRENCY,ED1_ NPEL,ED2_NPEL,ED3_N PEL,ED4_NPEL

Original Underlying Exposure Identifier,New Underlying Exposure Identifier,Original Obligor Identifier,New Obligor Identifier,Pool Addition Date,Date Of Repurchase,Redemption Date,Resident,Geographic Region - Obligor,Geographic Region Classification,Employment Status,Credit Impaired Obligor,Customer Type,Primary Income,RREL16 Currency,Primary Income Type,Primary Income Verification,Secondary Income,RREL20 Currency,Secondary Income Verification,Special Scheme,Origination Date,Maturity Date,Original Term,Origination Channel,Purpose,Original Principal Balance,RREL29 Currency,Current Principal Balance,RREL30 Currency,Prior Principal Balances,RREL31 Currency,Pari Passu Underlying Exposures,RREL32 Currency,Total Credit Limit,RREL33 Currency,Purchase Price,Amortisation Type,Principal Grace Period End Date,Scheduled Principal Payment Frequency,Scheduled Interest Payment Frequency,Payment Due,RREL39 Currency,Debt To Income Ratio,Balloon Amount,RREL41 Currency,Interest Rate Type,Current Interest Rate,Current Interest Rate Index,Current Interest Rate Index Tenor,Current Interest Rate Margin,lnterest Rate Reset Interval,Interest Rate Cap,Interest Rate Floor,Revision Margin 1,Interest Revision Date 1,Revision Margin 2,Interest Revision Date 2,Revision Margin 3,Interest Revision Date 3,Revised Interest Rate Index,Revised Interest Rate Index Tenor,Number Of Payments Before Securitisation,Percentage Of Prepayments Allowed Per Year, Prepayment Lock-Out End Date,Prepayment Fee,RREL61 Currency, Prepayment Fee End Date,Prepayment Date,Cumulative Prepayments,RREL64 Currency,Date Of Restructuring,Date Last In Arrears,Arrears Balance,RREL67 Currency,Number Of Days In Arrears,Account Status,Reason for Default or Foreclosure,Default Amount,RREL71 Currency,Default Date,Allocated Losses,RREL73 Currency,Cumulative Recoveries,RREL74 Currency,Litigation,Recourse,Deposit Amount,RREL77 Currency,Insurance Or Investment Provider,Original Lender Name,Original Lender Legal Entity Identifier,Original Lender Establishment Country,Originator Name,Originator Legal Entity Identifier,Originator Establishment Country,ln Receivership,Date of Last Contact,Deceased,Legal status,Legal Procedure Type,Legal Procedure Name,LegalActions Completed,Date of Entering Into Current Legal Process,Date of Insolvency Practitioner Appointment,Number of Current Judgements,Number of Discharged Judgements,Date of External Demand Issuance,Date when Reservation of Rights Letter Was Issued,Court Jurisdiction,Date of Obtaining Order for Possession,Comments on Other Litigation Related Process,Governing Law,Bespoke Repayment Description,Start Date of Interest Only Period,End Date of Interest Only Period,Start Date of Current Fixed Interest Period,End Date of Current Fixed Interest Period,Current Reversion Interest Rate,Last Payment Date,Syndicated Portion,MARP Entry,MARP Status,External Collections Level,Repayment Plan,Forbearance Level,Date of First Forbearance,Number of Historical Forbearance,Principal Forgiveness,NPEL39 Currency,Date of Principal Forgiveness,End Date of Forbearance,Repayment Amount Under Forbearance,NPEL42 Currency,Legal Unpaid Balance at month 1,NPEH3 Currency,Legal Unpaid Balance at month 2,NPEH4 Currency,Legal Unpaid Balance at month 3,NPEH5 Currency,Legal Unpaid Balance at month 4,NPEH6 Currency,Legal Unpaid Balance at month 5,NPEH7 Currency,Legal Unpaid Balance at month 6,NPEH8 Currency,Legal Unpaid Balance at month 7,NPEH9 Currency,Legal Unpaid Balance at month 8,NPEH10 Currency,Legal Unpaid Balance at month 9,NPEH11 Currency,Legal Unpaid Balance at month 10,NPEH12 Currency,Legal Unpaid Balance at month 11,NPEH13 Currency,Legal Unpaid Balance at month 12,NPEH14 Currency,Legal Unpaid Balance at month 13,NPEH15 Currency,Legal Unpaid Balance at month 14,NPEH16 Currency,Legal Unpaid Balance at month 15,NPEH17 Currency,Legal Unpaid Balance at month 16,NPEH18 Currency,Legal Unpaid Balance at month 17,NPEH19 Currency,Legal Unpaid Balance at month 18,NPEH20 Currency,Legal Unpaid Balance at month 19,NPEH21 Currency,Legal Unpaid Balance at month 20,NPEH22 Currency,Legal Unpaid Balance at month 21,NPEH23 Currency,Legal Unpaid Balance at month 22,NPEH24 Currency,Legal Unpaid Balance at month 23,NPEH25 Currency,Legal Unpaid Balance at month 24,NPEH26 Currency,Legal Unpaid Balance at month 25,NPEH27 Currency,Legal Unpaid Balance at month 26,NPEH28 Currency,Legal Unpaid Balance at month 27,NPEH29 Currency,Legal Unpaid Balance at month 28,NPEH30 Currency,Legal Unpaid Balance at month 29,NPEH31 Currency,Legal Unpaid Balance at month 30,NPEH32 Currency,Legal Unpaid Balance at month 31,NPEH33 Currency,Legal Unpaid Balance at month 32,NPEH34 Currency,Legal Unpaid Balance at month 33,NPEH35 Currency,Legal Unpaid Balance at month 34,NPEH36 Currency,Legal Unpaid Balance at month 35,NPEH37 Currency,Legal Unpaid Balance at month 36,NPEH38 Currency,History of Past-Due Balances at month 1,NPEH39 Currency,History of Past-Due Balances at month 2,NPEH40 Currency,History of Past-Due Balances at month 3,NPEH41 Currency,History of Past-Due Balances at month 4,NPEH42 Currency,History of Past-Due Balances at month 5,NPEH43 Currency,History of Past-Due Balances at month 6,NPEH44 Currency,History of Past-Due Balances at month 7,NPEH45 Currency,History of Past-Due Balances at month 8,NPEH46 Currency,History of Past-Due Balances at month 9,NPEH47 Currency,History of Past-Due Balances at month 10,NPEH48 Currency,History of Past-Due Balances at month 11,NPEH49 Currency,History of Past-Due Balances at month 12,NPEH50 Currency,History of Past-Due Balances at month 13,NPEH51 Currency,History of Past-Due Balances at month 14,NPEH52 Currency,History of Past-Due Balances at month 15,NPEH53 Currency,History of Past-Due Balances at month 16,NPEH54 Currency,History of Past-Due Balances at month 17,NPEH55 Currency,History of Past-Due Balances at month 18,NPEH56 Currency,History of Past-Due Balances at month 19,NPEH57 Currency,History of Past-Due Balances at month 20,NPEH58 Currency,History of Past-Due Balances at month 21,NPEH59 Currency,History of Past-Due Balances at month 22,NPEH60 Currency,History of Past-Due Balances at month 23,NPEH61 Currency,History of Past-Due Balances at month 24,NPEH62 Currency,History of Past-Due Balances at month 25,NPEH63 Currency,History of Past-Due Balances at month 26,NPEH64 Currency,History of Past-Due Balances at month 27,NPEH65 Currency,History of Past-Due Balances at month 28,NPEH66 Currency,History of Past-Due Balances at month 29,NPEH67 Currency,History of Past-Due Balances at month 30,NPEH68 Currency,History of Past-Due Balances at month 31,NPEH69 Currency,History of Past-Due Balances at month 32,NPEH70 Currency,History of Past-Due Balances at month 33,NPEH71 Currency,History of Past-Due Balances at month 34,NPEH72 Currency,History of Past-Due Balances at month 35,NPEH73 Currency,History of Past-Due Balances at month 36,NPEH74 Currency,History of Repayments - Not from collateral sales at month 1,NPEH75 Currency,History of Repayments - Not from collateral sales at month 2,NPEH76 Currency,History of Repayments - Not from collateral sales at month 3,NPEH77 Currency,History of Repayments - Not from collateral sales at month 4,NPEH78 Currency,History of Repayments - Not from collateral sales at month 5,NPEH79 Currency,History of Repayments - Not from collateral sales at month 6,NPEH80 Currency,History of Repayments - Not from collateral sales at month 7,NPEH81 Currency,History of Repayments - Not from collateral sales at month 8,NPEH82 Currency,History of Repayments - Not from collateral sales at month 9,NPEH83 Currency,History of Repayments - Not from collateral sales at month 10,NPEH84 Currency,History of Repayments - Not from collateral sales at month 11,NPEH85 Currency,History of Repayments - Not from collateral sales at month 12,NPEH86 Currency,History of Repayments - Not from collateral sales at month 13,NPEH87 Currency,History of Repayments - Not from collateral sales at month 14,NPEH88 Currency,History of Repayments - Not from collateral sales at month 15,NPEH89 Currency,History of Repayments - Not from collateral sales at month 16,NPEH90 Currency,History of Repayments - Not from collateral sales at month 17,NPEH91 Currency,History of Repayments - Not from collateral sales at month 18,NPEH92 Currency,History of Repayments - Not from collateral sales at month 19,NPEH93 Currency,History of Repayments - Not from collateral sales at month 20,NPEH94 Currency,History of Repayments - Not from collateral sales at month 21,NPEH95 Currency,History of Repayments - Not from collateral sales at month 22,NPEH96 Currency,History of Repayments - Not from collateral sales at month 23,NPEH97 Currency,History of Repayments - Not from collateral sales at month 24,NPEH98 Currency,History of Repayments - Not from collateral sales at month 25,NPEH99 Currency,History of Repayments - Not from collateral sales at month 26,NPEH100 Currency,History of Repayments - Not from collateral sales at month 27,NPEH101 Currency,History of Repayments - Not from collateral sales at month 28,NPEH102 Currency,History of Repayments - Not from collateral sales at month 29,NPEH103 Currency,History of Repayments - Not from collateral sales at month 30,NPEH104 Currency,History of Repayments - Not from collateral sales at month 31,NPEH105 Currency,History of Repayments - Not from collateral sales at month 32,NPEH106 Currency,History of Repayments - Not from collateral sales at month 33,NPEH107 Currency,History of Repayments - Not from collateral sales at month 34,NPEH108 Currency,History of Repayments - Not from collateral sales at month 35,NPEH109 Currency,History of Repayments - Not from collateral sales at month 36,NPEH110 Currency,History of Repayments - From collateral sales at month 1,NPEH111 Currency,History of Repayments - From collateral sales at month 2,NPEH112 Currency,History of Repayments - From collateral sales at month 3,NPEH113 Currency,History of Repayments - From collateral sales at month 4,NPEH114 Currency,History of Repayments - From collateral sales at month 5,NPEH115 Currency,History of Repayments - From collateral sales at month 6,NPEH116 Currency,History of Repayments - From collateral sales at month 7,NPEH117 Currency,History of Repayments - From collateral sales at month 8,NPEH118 Currency,History of Repayments - From collateral sales at month 9,NPEH119 Currency,History of Repayments - From collateral sales at month 10,NPEH120 Currency,History of Repayments - From collateral sales at month 11,NPEH121 Currency,History of Repayments - From collateral sales at month 12,NPEH122 Currency,History of Repayments - From collateral sales at month 13,NPEH123 Currency,History of Repayments - From collateral sales at month 14,NPEH124 Currency,History of Repayments - From collateral sales at month 15,NPEH125 Currency,History of Repayments - From collateral sales at month 16,NPEH126 Currency,History of Repayments - From collateral sales at month 17,NPEH127 Currency,History of Repayments - From collateral sales at month 18,NPEH128 Currency,History of Repayments - From collateral sales at month 19,NPEH129 Currency,History of Repayments - From collateral sales at month 20,NPEH130 Currency,History of Repayments - From collateral sales at month 21,NPEH131 Currency,History of Repayments - From collateral sales at month 22,NPEH132 Currency,History of Repayments - From collateral sales at month 23,NPEH133 Currency,History of Repayments - From collateral sales at month 24,NPEH134 Currency,History of Repayments - From collateral sales at month 25,NPEH135 Currency,History of Repayments - From collateral sales at month 26,NPEH136 Currency,History of Repayments - From collateral sales at month 27,NPEH137 Currency,History of Repayments - From collateral sales at month 28,NPEH138 Currency,History of Repayments - From collateral sales at month 29,NPEH139 Currency,History of Repayments - From collateral sales at month 30,NPEH140 Currency,History of Repayments - From collateral sales at month 31,NPEH141 Currency,History of Repayments - From collateral sales at month 32,NPEH142 Currency,History of Repayments - From collateral sales at month 33,NPEH143 Currency,History of Repayments - From collateral sales at month 34,NPEH144 Currency,History of Repayments - From collateral sales at month 35,NPEH145 Currency,History of Repayments - From collateral sales at month 36,NPEH146 Currency,Loan type - secured vs unsecured ,DPO ,Cash in Court ,Legal Procedure Costs in the period.

### Example 15

Input fields with the object asset information in csv-format:
RREC2,RREC3,RREC4,RREC5,RREC6,RREC7,RREC8,RREC9,RREC1 0,RREC11,RREC12,RREC13,RREC13_CURRENCY,RREC14,RREC15,R REC16,RREC17,RREC17_CURRENCY,RREC18,RREC19,RREC20,RRE C21,RREC21_CURRENCY,RREC23,NPEC5,NPEC6,NPEC7,NPEC8,NP EC9,NPEC9_CURRENCY,NPEC10,NPEC10_CURRENCY,NPEC11,NPE C12,NPEC12_CURRENCY,NPEC13,NPEC14,NPEC14_CURRENCY,NP EC15,NPEC15_CURRENCY,NPEC16,NPEC17,NPEC18,NPEC19,NPEC2 0,NPEC21,NPEC22,NPEC22_CURRENCY,NPEC23,NPEC24,NPEC24_C URRENCY,NPEC25,NPEC26,NPEC26_CURRENCY,NPEC27,ED1_NPE C

Underlying Exposure Identifier,Original Collateral Identifier,New Collateral Identifier,Collateral Type,Geographic Region - Collateral,Occupancy Type,Lien,Property Type,Energy Performance Certificate Value,Energy Performance Certificate Provider Name,Current Loan-To-Value,Current Valuation Amount,RREC13 Currency,Current Valuation Method,Current Valuation Date,Original Loan-To-Value,Original Valuation Amount,RREC17 Currency,Original Valuation Method,Original Valuation Date,Date Of Sale,Sale Price,RREC21 Currency,Guarantor Type,VAT Payable,Percentage Complete,Enforcement Status,Enforcement Status Third Parties,Mortgage Amount Assigned,NPEC9 Currency,Higher Ranking Underlying Exposure,NPEC10 Currency,Enforcement Description,Court Appraisal Amount,NPEC12 Currency,Date of Court Appraisal,On Market Price,NPEC14 Currency,Offer Price,NPEC15 Currency,Prepare Property for Sale Date,Property on Market Date,On Market Offer Date,Sale Agreed Date,Contracted Date,First Auction Date,Court Auction Reserve Price for First Auction,NPEC22 Currency,Next Auction Date,Court Auction Reserve Price for Next Auction,NPEC24 Currency,Last Auction Date,Court Auction Reserve Price for Last Auction,NPEC26 Currency,Number of Failed Auctions,Property Type NPL

### Example 16

Input fields with the object asset information in csv-format:
IVSS3,IVSS4,IVSS5,IVSS6,IVSS7,IVSS8,IVSS9,IVSS10,IVSS11,IVSS12,I VSS13,IVSS14,IVSS14_CURRENCY,IVSS15,IVSS15_CURRENCY,IVSS 16,IVSS16_CURRENCY,IVSS17,IVSS17_CURRENCY,IVSS18,IVSS19,IV SS19_CURRENCY,IVSS20,IVSS21,IVSS22,IVSS23,IVSS23_CURRENCY ,IVSS24,IVSS24_CURRENCY,IVSS25,IVSS25_CURRENCY,IVSS26,IVS S26_CURRENCY,IVSS27,IVSS28,IVSS28_CURRENCY,IVSS29,IVSS29_ CURRENCY,IVSS30,IVSS31,IVSS32,IVSS33,IVSS34,IVSS35,IVSS36,IVS S37,IVSS38,IVSS39,IVSS40,IVSS41,IVSS42,IVSS43,IVSS44,ED1_IVSS, ED2_IVSS,ED3_IVSS,ED4_IVSS,ED5_IVSS,ED6_IVSS,ED7_IVSS,ED8_1 VSS,ED9_IVSS,ED10_IVSS,ED11_IVSS,ED12_IVSS,ED13_IVSS,ED14_I VSS,ED15_IVSS,ED16_IVSS,ED17_IVSS,ED18_IVSS,ED19_IVSS,ED20 _IVSS,ED21_IVSS,ED22_IVSS,ED23_IVSS,ED24_IVSS,ED25_IVSS,ED2 6_IVSS,ED27_IVSS,ED28_IVSS,ED29_IVSS,ED30_IVSS,ED31_IVSS,ED 32_IVSS,ED33_IVSS,ED34_IVSS,ED35_IVSS,ED36_IVSS,ED37_IVSS,E D38_IVSS,ED39_IVSS,ED40_IVSS,ED41_IVSS,ED42_IVSS,ED43_IVSS, ED44_IVSS,ED45_IVSS,ED46_IVSS,ED47_IVSS,ED48_IVSS,ED49_IVS S,ED50_IVSS,ED51_IVSS,ED52_IVSS,ED53_IVSS,ED54_IVSS,ED55_IV SS,ED56_IVSS,ED57_IVSS,ED58_IVSS,ED59_IVSS,ED60_IVSS,ED61_I VSS,ED62_IVSS,ED63_IVSS,ED64_IVSS,ED65_IVSS,ED66_IVSS,ED67 _IVSS,ED68_IVSS,ED69_IVSS,ED70_IVSS,ED71_IVSS,ED72_IVSS,ED7 3_IVSS,ED74_IVSS,ED75_IVSS,ED76_IVSS,ED77_IVSS,ED78_IVSS,ED 79_IVSS,ED80_IVSS,ED81_IVSS,ED82_IVSS,ED83_IVSS,ED84_IVSS,E D85_IVSS,ED86_IVSS,ED87_IVSS,ED88_IVSS,ED89_IVSS,ED90_IVSS, ED91_IVSS,ED92_IVSS,ED93_IVSS,ED94_IVSS,ED95_IVSS,ED96_IVS S,ED97_IVSS

Securitisation Name,Reporting Entity Name,Reporting Entity Contact Person,Reporting Entity Contact Telephone,Reporting Entity Contact Emails,Risk Retention Method,Risk Retention Holder,Underlying Exposure Type,Risk Transfer Method,Trigger Measurements/Ratios,Revolving/ Ramp-Up Period End-Date,Principal Recoveries In The Period,IVSS14 Currency,Interest Recoveries In The Period,IVSS15 Currency,Principal Collections In The Period,IVSS16 Currency,Interest Collections In The Period,IVSS17 Currency,Drawings Under Liquidity Facility,Securitisation Excess Spread,IVSS19 Currency,Excess Spread Trapping Mechanism,Current Overcollateralisation,Annualised Constant Prepayment Rate,Dilutions,IVSS23 Currency,Gross Charge Offs In The Period,IVSS24 Currency, Repurchased Exposures,IVSS25 Currency,Restructured Exposures,IVSS26 Currency,Annualised Constant Default Rate,Defaulted Exposures,IVSS28 Currency,Defaulted Exposures CRR,IVSS29 Currency,Risk Weight Approach,"Obligor Probability Of Default in Range [0.00%,0.10%)","Obligor Probability Of Default in Range [0.10%,0.25%)","Obligor Probability Of Default in Range [0.25%,1.00%)","Obligor Probability Of Default in Range [1.00%,7.50%)","Obligor Probability Of Default in Range [7.50%,20.00%)","Obligor Probability Of Default in Range [20.00%,100.00%]",Bank Internal Loss Given Default Estimate,Arrears 1-29 Days,Arrears 30-59 Days,Arrears 60-89 Days,Arrears 90-119 Days,Arrears 120-149 Days,Arrears 150-179 Days,Arrears 180+ Days,Payment Date,Legal Maturity Date,Principal Outstanding Balance,Cumulative Additions,Cumulative Replenishments Amount,Replenishments Amount for the Period,Principal Prepayments in the Period (amount),Cumulative Pre Payments,Principal Outstanding Balance of the Loans in Arrears,Split Between Fixed and Floating Rate Loans,Weighted Average Interest Rate,Weighted Average Margin,Weighted Average Seasoning,Weighted Average Remaining Term,Weighted Average LTV,Portfolio WA Loan Term ,Current Reserves,Reserves Target Balance,PCP Handbacks Cumulative Amount,PCP Recovery - Cumulative,PCP Actual Returns,PCP Negative Adjustment,PCP Inventory,Are arrears reported including or excluding repossessions?,WALTV Indexed,Portion of Interest Only Loans,Loans in Grace Period,120 day Delinquent Balance,150 day Delinquent Balance,180+ day Delinquent Balance,30 day Delinquent Balance,60 day Delinquent Balance,90 day Delinquent Balance,Cumulative Principal Gross Loss,Cumulative Principal Net Loss,Principal Net Loss in the period,Outstanding Foreclosure balance,Cumulative Foreclosure Balance,Foreclosure Balance Count,Cumulative Principal Recoveries,Cumulative Recoveries,Real Estate Owned Balance,Weighted Average Coupon/ Loan Coupon,Interest Accrued,lnterest Shortfall,Interest Deferred,Job Insurance Provider,Life Insurance Provider,Next Calculation Date,UW WA Pool LTV,UW WA Pool ICR,UW WA Pool DSCR,Cumulative Number of Loans in Default,Number of Loans in Arrears in the Period,Cumulative Number of Loans with Losses,Loans in Breach of Covenants ,Pool Vacancy Rate,Pool Lease Expiry Profile ,Gross Cumulative Defaults,Period Defaults,Principal Amortised,WAC,Transaction Definitions,Net Excess Spread ,Fixed Interest Amount,Drawings Under Liquidity Facility Amount,Properties Sold Amount for the Period,Properties Sold Cumulative Amount ,Repossessions Outstanding Amount ,Repossessions Cumulative Amount,Substitutions Amount for the Period, Substitutions Cumulative Amount,VT Amount in the Period,Cumulative VT Amount,VT Periodic Recoveries Amount,VT Recoveries Amount Cumulative,Legal & Procedure Costs Cumulative,Legal & Procedures Fees cumulative,Legal Procedure Costs in the Period,Expected gross Cumulative Collections as per the Original Business Plan,Expected Gross Cumulative Collections as per Updated Business Plan ,Expected Net Cumulative Collections as per Original Business Plan ,Expected Net Cumulative Collections as per Updated Business Plan ,Revised Business Plan (at least for the immediately following periods) ,Period Gross Collections before Deduction of Fees and Costs,Period Net Collections after Deduction of Costs (or recovery expenses),Period Net Collections after Deduction of Fees and Costs,lnformation on Profitability for Fully Closed and Fully Resolved Debtors,Gross Book Value at the End of Period,Information on GACS Costs for Remaining Life of Transaction - Accrued Value,lnformation on GACS Costs for Remaining Life of Transaction - Paid Value,Credit Events in the period,Cumulative Credit Events (amount),"Loss on the Tranche (write-down), for Synthetic Deals Only",Receiver of Rent Outstanding Amount,Split Collections by Type of Proceeds ,Legal & Procedures Fees in the Period.

### Example 17

Input fields with the object asset information in csv-format:
IVSF2,IVSF3,IVSF4,IVSF5,IVSF5_CURRENCY,IVSF6,IVSF6_CURRENC Y

Original Cashflow Item Identifier,New Cashflow Item Identifier,Cashflow Item,Amount Paid During Period,IVSF5 Currency,Available Funds Post,IVSF6 Currency.

## Claims

1. A computer implemented system for evaluating a credit rating of asset backed securities, the computer implemented system comprising:
• a data warehouse,
• an electronic device with a processor, a memory coupled to the processor for storing a source code and a credit rating display module that displays the calculated credit rating,
• a software system executable on the processor, the software system including a data loan template module configured to access a revised loan-level data template stored in the data warehouse and an evaluating module configured to calculate the credit rating of the asset backed securities using an algorithm based on a revised loan-level data template,
**characterized in that**
• the data warehouse comprises an automatic data transfer both to a financial regulatory authority and to a credit rating agency,
• the data warehouse stores the revised loan-level data template wherein the revised loan-level data template comprises a primary data field and a secondary data field, the primary data field includes a primary group of information based on a financial regulatory authority template and the secondary data field includes a secondary group of information based on a credit rating agency template supplied by a credit rating agency.

2. The computer implemented system according to claim 1, **characterized in that** the data warehouse is located remotely on a server and is accessible by the electronic device.

3. The computer implemented system according to claim 1, **characterized in that** the algorithm is based on machine learning.

4. The computer implemented system according to claim 1, **characterized in that** the financial regulatory authority is the European Securities and Markets Authority.

5. A method for evaluating a credit rating of asset backed securities, the method comprising:
• retrieving a revised loan-level data template from a data warehouse, and
• calculating the credit rating of the asset backed securities using an algorithm based on the revised loan-level data template, and
• displaying the calculated credit rating of the asset backed securities,
**characterized in that**
• the revised loan-level data template is retrieved by means of an automatic data transfer process from a financial regulatory authority template and from a credit rating agency template.

6. The method according to claim 5, **characterized in that** the primary group of information is updated, edited or modified by the financial regulatory authority.

7. The method according to claim 5, **characterized in that** the secondary group of information is updated, edited or modified by the credit rating agency.

8. The method according to claim 5, **characterized in that** the revised loan-level data template is automatically updated by the financial regulatory authority template and the credit rating agency template.

9. The method according to claim 5, **characterized in that** the algorithm is based on machine learning.

10. The method according to claim 9, **characterized in that** the data warehouse is remotely located on a cloud server and is accessible by the machine.

11. The method according to claim 9, **characterized in that** the machine is a networked electronic device.

12. The method according to claim 5, **characterized in that** the calculated credit rating is updated at a regular financial interval.

13. The method according to claim 5, **characterized in that** the credit rating information is based on residential loans, tenant loans, commercial real estate loans, corporate loans, automobile loans, consumer loans, credit card loans, leasing loans, non-performing exposure loans or investor report information.

14. The method according to claim 5, **characterized in that** the credit rating information is based on residential collaterals, commercial real estate collaterals, corporate collaterals, non-performing exposure collaterals or investor report cashflows.
